(19) Europäisches Patentamt / European Patent Office / Office européen des brevets

(11) **EP 4 589 858 A1**

(12) **EUROPEAN PATENT APPLICATION**
published in accordance with Art. 153(4) EPC

(43) Date of publication:
**23.07.2025 Bulletin 2025/30**

(21) Application number: **23893723.9**

(22) Date of filing: **17.11.2023**

(51) International Patent Classification (IPC):
**H04B 7/06** (2006.01)

(52) Cooperative Patent Classification (CPC):
**H04B 7/06**

(86) International application number:
**PCT/CN2023/132185**

(87) International publication number:
**WO 2024/109633 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 CN 202211493654**

(71) Applicant: **Huawei Technologies Co., Ltd.
Shenzhen, Guangdong 518129 (CN)**

(72) Inventors:
• **CHEN, Lei**
  **Shenzhen, Guangdong 518129 (CN)**
• **LIU, Fengwei**
  **Shenzhen, Guangdong 518129 (CN)**
• **ZHANG, Zhenbing**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL STATE INFORMATION SENDING METHOD AND APPARATUS, AND CHANNEL STATE INFORMATION RECEIVING METHOD AND APPARATUS**

(57) This application discloses a channel state information sending method, a channel state information receiving method, and an apparatus. The method includes: A terminal device receives a reference signal from a network device, where the reference signal corresponds to a plurality of reference signal ports. The terminal device determines N first port groups based on the plurality of reference signal ports, where the plurality of reference signal ports include all reference signal ports in the N first port groups, different first port groups in the N first port groups include different reference signal ports, and N is an integer greater than or equal to 1. The terminal device determines channel state information of N equivalent ports under a first weight based on the first weight and channel information of the N first port groups, where the N first port groups are in one-to-one correspondence with the N equivalent ports. The terminal device sends first channel state information to the network device, where the first channel state information is determined based on the channel state information of the N equivalent ports under the first weight.

FIG. 8

## Description

This application claims priority to Chinese Patent Application No. 202211493654.3, filed with the China National Intellectual Property Administration on November 25, 2022 and entitled "CHANNEL STATE INFORMATION SENDING METHOD, CHANNEL STATE INFORMATION RECEIVING METHOD AND APPARATUS", which is incorporated herein by reference in its entirety.

## TECHNICAL FIELD

This application relates to the field of communication technologies, and in particular, to a channel state information sending method, a channel state information receiving method, and an apparatus.

## BACKGROUND

In a high-frequency communication system, a network device usually transmits a signal through a large-scale array antenna. In this way, the network device uses a high array gain to counteract a path loss caused by an increase of a frequency band, to improve a coverage capability. From the perspective of an implementation of the network device, according to a beamforming implementation solution, there may be roughly three array weighting manners: digital beamforming (digital beamforming, DBF), analog beamforming (analog beamforming, ABF), and hybrid beamforming (hybrid beamforming, HBF).

For the ABF and the HBF, signal quality of communication between devices is better only when a beam is aligned with a communication target. For a terminal device, a process in which the network device selects a beam for the terminal device may be referred to as beam scanning or beam training. Beam scanning means that the network device separately sends reference signals by using different beams, and the terminal device separately measures the reference signals and feeds back measurement results, to assist the network device in determining a beam with best signal quality, and selecting the beam with the best signal quality for communication transmission with the terminal device.

In the foregoing technical solution, for each beam, the network device needs to separately send a corresponding reference signal. The terminal device measures a reference signal on each beam, and feeds back corresponding channel state information. That is, the network device can select only one beam and send a corresponding reference signal at a moment. Reference signals of different beams can be sent only in a time division sending manner. Consequently, efficiency of obtaining the channel state information by the network device is low.

## SUMMARY

This application provides a channel state information sending method, a channel state information receiving method, and an apparatus, to improve efficiency of obtaining channel state information by a network device.

According to the first aspect of this application, a channel state information sending method is provided, including:

A terminal device receives a reference signal from a network device, where the reference signal corresponds to a plurality of reference signal ports. The terminal device determines N first port groups based on the plurality of reference signal ports, where the plurality of reference signal ports include all reference signal ports in the N first port groups, different first port groups in the N first port groups include different reference signal ports, and N is an integer greater than or equal to 1. The terminal device determines channel state information of N equivalent ports under a first weight based on the first weight and channel information of the N first port groups, where the N first port groups are in one-to-one correspondence with the N equivalent ports. The terminal device sends first channel state information to the network device, where the first channel state information is determined based on the channel state information of the N equivalent ports under the first weight, or the first channel state information includes the channel state information of the N equivalent ports under the first weight.

In the foregoing technical solution, the terminal device determines the channel state information of the N equivalent ports under the first weight based on the first weight and the channel information of the N first port groups. Further, the channel information of the N first port groups is determined based on the reference signal. The channel information of the N first port groups is more complete channel information. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved. Further, the terminal device can obtain complete channel information by measuring the reference signal, and does not need to measure a plurality of reference signals, to reduce a power consumption loss caused by measuring the reference signal by the terminal device.

According to a second aspect of this application, a channel state sending method is provided, including:

A terminal device receives a reference signal from a network device, where the reference signal corresponds to a plurality of reference signal ports. The terminal device determines channel information of the plurality of reference signal ports based on the reference signal. The terminal device determines channel information of N first port groups based on the channel information of the plurality of reference signal ports, where the plurality of reference signal ports include all reference signal ports in the N first port groups, different first port groups in the N first port groups include different reference signal ports, and N is an integer greater than or equal to 1. The terminal device determines channel state information of N equivalent ports under a first weight based on the first weight and the channel information of the N first port groups, where the N first port groups are in one-to-one correspondence with the N equivalent ports. The terminal device sends first channel state information to the network device, where the first channel state information is determined based on the channel state information of the N equivalent ports under the first weight, or the first channel state information includes the channel state information of the N equivalent ports under the first weight.

In the foregoing technical solution, the terminal device determines the channel information of the plurality of reference signal ports based on the reference signal. The channel information of the plurality of reference signal ports is more complete channel information. The terminal device may determine the channel information of the N first port groups based on the channel information of the plurality of reference signal ports, and then determine the channel state information of the N equivalent ports under the first weight with reference to the first weight and the channel information of the N first port groups. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved. Further, the terminal device can obtain complete channel information by measuring the reference signal, and does not need to measure a plurality of reference signals, to reduce a power consumption loss caused by measuring the reference signal by the terminal device.

According to a third aspect of this application, a channel state information receiving method is provided, including:

A network device sends a reference signal to a terminal device, where the reference signal corresponds to a plurality of reference signal ports. The network device receives first channel state information from the terminal device, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N first port groups are in one-to-one correspondence with the N equivalent ports, the plurality of reference signal ports include all reference signal ports in the N first port groups, different first port groups in the N first port groups include different reference signal ports, and N is an integer greater than or equal to 1.

In the foregoing technical solution, the network device sends the reference signal to the terminal device. Therefore, the terminal device obtains the channel information of the N first port groups. The channel information of the N first port groups is determined based on the reference signal. The network device receives the first channel state information from the terminal device. The first channel state information is determined based on the channel state information of the N equivalent ports under the first weight. The channel state information of the N equivalent ports under the first weight is determined based on the first weight and the channel information of the N first port groups. The channel information of the N first port groups is more complete channel information. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved. Further, the terminal device can obtain complete channel information by measuring the reference signal, and does not need to measure a plurality of reference signals, to reduce a power consumption loss caused by measuring the reference signal by the terminal device.

According to a fourth aspect of this application, a channel state information receiving method is provided, including:

A network device sends a reference signal to a terminal device, where the reference signal corresponds to a plurality of reference signal ports. The network device receives first channel state information from the terminal device, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N equivalent ports are in one-to-one correspondence with the N equivalent ports, the channel information of the N first port groups is determined based on channel information of the plurality of reference signal ports, the channel information of the plurality of reference signal ports is determined based on the reference signal, and N is an integer greater than or equal to 1.

In the foregoing technical solution, the network device sends the reference signal to the terminal device. In this way, the terminal device determines the channel information of the plurality of reference signal ports based on the reference signal. The channel information of the plurality of reference signal ports is more complete channel information. The terminal device may determine the channel information of the N first port groups based on the channel information of the plurality of reference signal ports, and then determine the channel state information of the N equivalent ports under the first weight with reference to the first weight and the channel information of the N first port groups. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved. Further, the network device only needs to send the reference signal by using a resource of the reference signal, and does not need to configure a plurality of reference signal resources for channel measurement. This reduces resource overheads and a power consumption loss caused by sending the reference signal by the network device.

Based on any one of the first aspect to the fourth aspect, in a possible implementation, the channel state information of the N equivalent ports under the first weight includes a first precoding matrix indicator (precoding matrix indicator, PMI), and the first PMI indicates a precoding matrix of the N equivalent ports under the first weight. The first channel state information includes an index of a first basis and a first coefficient. The first coefficient is determined based on the precoding matrix of the N equivalent ports under the first weight and the first basis. The first basis is a spatial domain basis, a frequency domain basis, or a spatial-frequency joint basis. In this implementation, the first channel state information includes the index of the first basis and the first coefficient. That is, the terminal device performs quantization compression on the first PMI by using the first basis, to reduce overheads caused by reporting the first PMI by the terminal device.

Based on any one of the first aspect to the fourth aspect, in a possible implementation, the first channel state information includes an index of a frequency domain basis and a second coefficient corresponding to a precoding weight of M equivalent ports of the N equivalent ports under the first weight, the second coefficient is determined based on the precoding weight of the M equivalent ports under the first weight and the frequency domain basis, and M is greater than or equal to 1 and less than N. In this implementation, the terminal device may select to report channel state information of a part of equivalent ports under the first weight, to reduce reporting overheads.

Based on any one of the first aspect to the fourth aspect, in a possible implementation, the first channel state information further includes at least one of the following: a first channel quality indicator (channel quality indicator, CQI) and a first rank indicator (rank indicator, RI). The first CQI indicates channel quality corresponding to the N equivalent ports under the first weight, and the first RI indicates a rank of a channel corresponding to the N equivalent ports under the first weight. In this implementation, the first information state information may further include more channel state information of the N equivalent ports under the first weight, so that the network device determines signal quality of the beam corresponding to the first weight.

Based on the first aspect or the second aspect, in a possible implementation, the method further includes:
The terminal device determines channel state information of the N equivalent ports under all of R second weights based on the R second weights and the channel information of the N first port groups, where R is an integer greater than or equal to 1. The first channel state information is determined based on the channel state information of the N equivalent ports under the first weight and channel state information of the N equivalent ports under all of X second weights of the R second weights, and X is an integer greater than or equal to 1 and less than or equal to R.

In this implementation, the terminal device may further determine the channel state information of the N equivalent ports under all of the R second weights based on the R second weights and the channel information of the N first port groups. Therefore, the terminal device quickly obtains channel state information of a beam corresponding to each weight, and feeds back corresponding channel state information to the network device. Efficiency of obtaining channel state information by the network device is improved. The terminal device does not need to measure a plurality of reference signals, to reduce a power consumption loss of the terminal device.

Based on any one of the first aspect to the fourth aspect, in a possible implementation, the first channel state information includes a first PMI and X second PMIs, and the first PMI indicates a precoding matrix of the N equivalent ports under the first weight. The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI. The X second PMIs belong to the R second PMIs. In this implementation, the terminal device may report the first PMI and the X second PMIs, so that the network device determines precoding matrices of the N equivalent ports under corresponding weights.

Based on any one of the first aspect to the fourth aspect, in a possible implementation, the channel state information of the N equivalent ports under the first weight includes a first PMI, and the first PMI indicates a precoding matrix of the N equivalent ports under the first weight.

The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI. The first channel state information includes a third coefficient, X fourth coefficients, and an index of a second basis. The third coefficient is determined based on the precoding matrix of the N equivalent ports under the first weight and the second basis, the X fourth coefficients are in one-to-one correspondence with X second PMIs in the R second PMIs, one of the X fourth coefficients is determined based on a precoding matrix indicated by a second PMI corresponding to the fourth coefficient and a projection onto the second basis, and the second basis is a spatial domain basis, a frequency domain basis, or a spatial-frequency joint basis.

In this implementation, the third system is obtained by projecting the precoding matrix of the N equivalent ports under the first weight onto the second basis. One of the X fourth coefficients is obtained by projecting a precoding matrix indicated by a second PMI corresponding to the fourth coefficient onto the second basis. It can be learned that the second basis is a shared basis, to reduce reporting overheads of the terminal device.

Based on any one of the first aspect to the fourth aspect, in a possible implementation, the first channel state information further includes an eighth coefficient, an index of a third basis, X ninth coefficients, and indexes of bases corresponding to the X ninth coefficients.

The eighth coefficient is determined based on the precoding matrix of the N equivalent ports under the first weight and the third basis, the X ninth coefficients are in one-to-one correspondence with the X second PMIs, and one of the X ninth coefficients is determined based on a precoding matrix indicated by a second PMI corresponding to the ninth coefficient and a basis corresponding to the ninth coefficient. The third basis is a spatial domain basis, a frequency domain basis, or a spatial-frequency joint basis, and the bases corresponding to the X ninth coefficients are spatial domain bases, frequency domain bases, or spatial-frequency joint bases.

In this implementation, the first channel state information further includes the eighth coefficient, the index of the third basis, the X ninth coefficients, and the indexes of the bases corresponding to the X ninth coefficients. Therefore, the network device obtains channel state information of the N equivalent ports under each weight.

Based on the second aspect, in a possible implementation, before the terminal device determines the channel information of the N first port groups based on the channel information of the plurality of reference signal ports, the method further includes: The terminal device receives first configuration information from the network device, where the first configuration information indicates P second port groups, and the N first port groups are determined based on a preset rule and the P second port groups. In this implementation, the terminal device may further configure the P second port groups. Therefore, the terminal device determines the N first port groups based on the P second port groups.

Based on the second aspect, in a possible implementation, that the terminal device determines channel information of N first port groups based on the channel information of the plurality of reference signal ports includes: The terminal device determines channel information of the P second port groups based on the first configuration information and the channel information of the plurality of reference signal ports. The terminal device determines the channel information of the N first port groups based on a preset rule and the channel information of the P second port groups. In this implementation, the terminal device may first determine the channel information of the P second port groups with reference to the first configuration information, and then determine the channel information of the N first port groups. This facilitates the implementation of the solution.

Based on the first aspect, in a possible implementation, before the terminal device determines the N first port groups, the method further includes: The terminal device receives first configuration information from the network device, where the first configuration information indicates P second port groups, and the N first port groups are determined based on the P second port groups. In this implementation, the terminal device may further configure the P second port groups. Therefore, the terminal device determines the N first port groups based on the P second port groups.

Based on the first aspect, in a possible implementation, that the terminal device determines N first port groups includes: The terminal device determines the P second port groups based on the first configuration information. The terminal device determines the N first port groups based on a preset rule and the P second port groups. In this implementation, the terminal device may first determine the P second port groups with reference to the first configuration information, and then determine the N first port groups. This facilitates the implementation of the solution.

Based on the third aspect or the fourth aspect, in a possible implementation, the method further includes: The network device sends first configuration information to the terminal device, where the first configuration information indicates P second port groups, and the N first port groups are determined based on the P second port groups. Therefore, the terminal device determines the N first port groups based on the P second port groups.

Based on any one of the first aspect to the fourth aspect, in a possible implementation, the first configuration information includes a quantity of the plurality of reference signal ports and a code division multiplexing type used by the plurality of reference signal ports, and a value of P is any one of the following:

a ratio of the quantity of the plurality of reference signal ports to a quantity of reference signal ports using time-domain code division indicated by the code division multiplexing type; the quantity of reference signal ports using time-domain code division indicated by the code division multiplexing type; a ratio of the quantity of the plurality of reference signal ports to a quantity of code division multiplexing groups, where the quantity of code division multiplexing groups is equal to a ratio of the quantity of the plurality of reference signal ports to a quantity of reference signal ports included in each code division multiplexing group indicated by the code division multiplexing type; a product of the quantity of code division multiplexing groups and the quantity of reference signal ports using time-domain code division indicated by the code division multiplexing type; or the quantity of code division multiplexing groups. In this implementation, a related configuration of the reference signal included in the first configuration information is shown, and the value of P is indirectly indicated by the configuration of the reference signal. Therefore, in a process in which the network device delivers the configuration of the reference signal, the value of P is indicated. This helps reduce configuration overheads of the network device.

Based on any one of the first aspect to the fourth aspect, in a possible implementation, reference signal ports in the P second port groups are obtained by evenly grouping the plurality of reference signal ports in ascending order of port numbers of the reference signal ports based on a quantity of the P second port groups.

Based on the first aspect or the second aspect, in a possible implementation, the method further includes: The terminal device receives second configuration information from the network device, where the second configuration information is used to configure the first weight. In this implementation, the terminal device may receive the first weight configured by the network device, so that the terminal device determines the channel state information of the N equivalent ports under the first weight.

Based on the third aspect or the fourth aspect, in a possible implementation, the method further includes: The network device sends second configuration information to the terminal device, where the second configuration information is used to configure the first weight. In this way, the terminal device determines the channel state information of the N equivalent ports under the first weight.

Based on any one of the first aspect to the fourth aspect, in a possible implementation, the first weight is determined by the terminal device. In this implementation, the terminal device may independently determine the first weight, to reduce indication overheads of the network device.

Based on the first aspect or the second aspect, in a possible implementation, the first weight is a first codebook selected by the terminal device from a codebook set, and the method further includes:

The terminal device sends indication information to the network device, where the indication information indicates the first codebook; or the indication information indicates a beam direction corresponding to the first weight, and the beam direction corresponding to the first weight is used by the network device to determine the first codebook.

In this implementation, if the terminal device independently determines the first weight, the terminal device should further indicate the first weight to the network device. In this way, the network device determines channel state information of a beam corresponding to a weight corresponding to the channel state information reported by the terminal device.

Based on the third aspect or the fourth aspect, in a possible implementation, the first weight is a first codebook selected by the terminal device from a codebook set; and the method further includes: The network device receives indication information from the terminal device, where the indication information indicates the first codebook; or the indication information indicates a beam direction corresponding to the first weight, and the beam direction corresponding to the first weight is used by the network device to determine the first codebook. In this implementation, if the terminal device independently determines the first weight, the terminal device should further indicate the first weight to the network device. In this way, the network device determines channel state information of a beam corresponding to a weight corresponding to the channel state information reported by the terminal device.

Based on any one of the first aspect to the fourth aspect, in a possible implementation, in the plurality of reference signal ports, a first part of reference ports correspond to a first polarization direction, and a second part of reference signal ports correspond to a second polarization direction. The first part of reference signal ports are first half of reference signal ports with smaller port numbers of reference signal ports in the plurality of reference signal ports, and the second part of reference signal ports are second half of reference signal ports with larger port numbers of reference signal ports in the plurality of reference signal ports. In this implementation, the network device may load corresponding polarization directions on different reference signal ports, to implement measurement on channels in different polarization directions.

Based on any one of the first aspect to the fourth aspect, in a possible implementation, one equivalent port corresponds to one digital port, and different equivalent ports correspond to different digital ports.

Based on any one of the first aspect to the fourth aspect, in a possible implementation, each of the plurality of reference signal ports corresponds to one analog port, and different reference signal ports correspond to different analog ports.

Based on any one of the first aspect to the fourth aspect, in a possible implementation, the first configuration information includes a quantity of the plurality of reference signal ports, a code division multiplexing type used by the plurality of reference signal ports, and a fifth coefficient, and a value of P is any one of the following: the quantity of the plurality of reference signal ports divided by a sum of the fifth coefficient and a quantity of reference signal ports using time-domain code division indicated by the code division multiplexing type; the quantity of reference signal ports using time

domain code division indicated by the code division multiplexing type divided by the fifth coefficient; the quantity of the plurality of reference signal ports divided by a quantity of code division multiplexing groups, where the quantity of code division multiplexing groups is equal to a sum of the fifth coefficient and the quantity of the plurality of reference signal ports divided by a quantity of reference signal ports included in each code division multiplexing group indicated by the code division multiplexing type; the quantity of code division multiplexing groups is multiplied by the quantity of reference signal ports using time domain code division indicated by the code division multiplexing type, and then divided by the fifth coefficient; or the quantity of code division multiplexing groups divided by the fifth coefficient. In this implementation, a related configuration of the reference signal included in the first configuration information is shown, and the value of P is indirectly indicated by the configuration of the reference signal. Therefore, in a process in which the network device delivers the configuration of the reference signal, the value of P is indicated. This helps reduce configuration overheads of the network device. Further, the network device may not perform weighting on all port groups including reference signal port groups in an analog domain. Therefore, the first configuration information may include the fifth coefficient used to determine the quantity of second port groups.

Based on any one of the first aspect to the fourth aspect, in a possible implementation, the first configuration information includes a sixth coefficient X, the sixth coefficient indicates that each of the P second port groups includes X reference signal ports, and the $i^{th}$ second port group in the P second port groups includes X reference signal ports with consecutive port numbers that start from and include the $(X*i)^{th}$ reference signal port in the plurality of reference signal ports, where i is an integer greater than or equal to 1 and less than or equal to P, and P is an integer greater than or equal to 1. In this implementation, the first configuration information includes the sixth coefficient, and the reference signal port included in each of the P second port groups is directly indicated by the sixth coefficient.

Based on any one of the first aspect to the fourth aspect, in a possible implementation, the first configuration information includes a seventh coefficient R, the seventh coefficient R indicates that a difference between port numbers of any two reference signal ports with adjacent port numbers that are included in each of the P second port groups is R, and a port number of a reference signal port in the $i^{th}$ second port group in the P second port groups is an integer multiple of i-1, where i is an integer greater than or equal to 1 and less than or equal to P, and R is an integer greater than or equal to 1. In this implementation, the first configuration information includes the seventh coefficient, and the reference signal port included in each of the P second port groups is directly indicated by the seventh coefficient.

According to a fifth aspect of this application, a first communication apparatus is provided, including:

a transceiver module, configured to receive a reference signal from a network device, where the reference signal corresponds to a plurality of reference signal ports; and
a processing module, configured to: determine N first port groups based on the plurality of reference signal ports, where the plurality of reference signal ports include all reference signal ports in the N first port groups, different first port groups in the N first port groups include different reference signal ports, and N is an integer greater than or equal to 1; and determine channel state information of N equivalent ports under a first weight based on the first weight and channel information of the N first port groups, where the N first port groups are in one-to-one correspondence with the N equivalent ports.

The transceiver module is further configured to send first channel state information to the network device, where the first channel state information is determined based on the channel state information of the N equivalent ports under the first weight, or the first channel state information includes the channel state information of the N equivalent ports under the first weight.

Based on the fifth aspect, in a possible implementation, the channel information of the N first port groups is determined based on the reference signal.

According to a sixth aspect of this application, a first communication apparatus is provided, including:

a transceiver module, configured to receive a reference signal from a second communication apparatus, where the reference signal corresponds to a plurality of reference signal ports; and
a processing module, configured to: determine channel information of the plurality of reference signal ports based on the reference signal; determine channel information of N first port groups based on the channel information of the plurality of reference signal ports, where the plurality of reference signal ports include all reference signal ports in the N first port groups, different first port groups in the N first port groups include different reference signal ports, and N is an integer greater than or equal to 1; and determine channel state information of N equivalent ports under a first weight based on the first weight and the channel information of the N first port groups, where the N first port groups are in one-to-one correspondence with the N equivalent ports.

The transceiver module is further configured to send first channel state information to the second communication apparatus, where the first channel state information is determined based on the channel state information of the N equivalent ports under the first weight, or the first channel state information includes the channel state information of the N equivalent ports under the first weight.

According to a seventh aspect of this application, a second communication apparatus is provided, including: a transceiver module, configured to: send a reference signal to a terminal device, where the reference signal corresponds to a plurality of reference signal ports; and receive first channel state information from the terminal device, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N first port groups are in one-to-one correspondence with the N equivalent ports, the plurality of reference signal ports include all reference signal ports in the N first port groups, different first port groups in the N first port groups include different reference signal ports, and N is an integer greater than or equal to 1.

Based on the seventh aspect, in a possible implementation, the channel information of the N first port groups is determined based on the reference signal.

According to an eighth aspect of this application, a second communication apparatus is provided, including: a transceiver module, configured to: send a reference signal to a first communication apparatus, where the reference signal corresponds to a plurality of reference signal ports; and receive first channel state information from the first communication apparatus, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N equivalent ports are in one-to-one correspondence with the N equivalent ports. The channel information of the N first port groups is determined based on channel information of the plurality of reference signal ports, the channel information of the plurality of reference signal ports is determined based on the reference signal, and N is an integer greater than or equal to 1.

Based on any one of the fifth aspect to the eighth aspect, in a possible implementation, the channel state information of the N equivalent ports under the first weight includes a first PMI, and the first PMI indicates a precoding matrix of the N equivalent ports under the first weight. The first channel state information includes an index of a first basis and a first coefficient. The first coefficient is determined based on the precoding matrix of the N equivalent ports under the first weight and the first basis. The first basis is a spatial domain basis, a frequency domain basis, or a spatial-frequency joint basis.

Based on any one of the fifth aspect to the eighth aspect, in a possible implementation, the first channel state information includes an index of a frequency domain basis and a second coefficient corresponding to a precoding weight of M equivalent ports of the N equivalent ports under the first weight, the second coefficient is determined based on the precoding weight of the M equivalent ports under the first weight and the frequency domain basis, and M is greater than or equal to 1 and less than N.

Based on any one of the fifth aspect to the eighth aspect, in a possible implementation, the first channel state information further includes at least one of the following: a first CQI and a first RI. The first CQI indicates channel quality corresponding to the N equivalent ports under the first weight, and the first RI indicates a rank of a channel corresponding to the N equivalent ports under the first weight.

Based on the fifth aspect or the sixth aspect, in a possible implementation, the processing module is further configured to:

determine channel state information of the N equivalent ports under all of R second weights based on the R second weights and the channel information of the N first port groups, where R is an integer greater than or equal to 1. The first channel state information is determined based on the channel state information of the N equivalent ports under the first weight and channel state information of the N equivalent ports under all of X second weights of the R weights, and X is an integer greater than or equal to 1 and less than or equal to R.

Based on any one of the fifth aspect to the eighth aspect, in a possible implementation, the first channel state information includes a first PMI and X second PMIs, and the first PMI indicates a precoding matrix of the N equivalent ports under the first weight. The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI. The X second PMIs belong to the R second PMIs.

Based on any one of the fifth aspect to the eighth aspect, in a possible implementation, the channel state information of the N equivalent ports under the first weight includes a first PMI, and the first PMI indicates a precoding matrix of the N equivalent ports under the first weight.

The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI. The first channel state information includes a third coefficient, X fourth coefficients, and an index of a second basis. The third coefficient is determined based on the precoding matrix of the N equivalent ports under the first weight and the second basis, the X fourth coefficients are in one-to-one correspondence with X second PMIs in the R second PMIs, one of the X fourth coefficients is determined based on a precoding matrix indicated by a second PMI corresponding to the fourth coefficient and a projection of the second basis, and the second basis is a spatial domain basis, a frequency domain basis, or a spatial-frequency joint basis.

Based on any one of the fifth aspect to the eighth aspect, in a possible implementation, the first channel state information further includes an eighth coefficient, an index of a third basis, X ninth coefficients, and indexes of bases corresponding to the X ninth coefficients.

The eighth coefficient is determined based on the precoding matrix of the N equivalent ports under the first weight and the third basis, the X ninth coefficients are in one-to-one correspondence with the X second PMIs, and one of the X ninth coefficients is determined based on a precoding matrix indicated by a second PMI corresponding to the ninth coefficient and a basis corresponding to the ninth coefficient. The third basis is a spatial domain basis, a frequency domain basis, or a spatial-frequency joint basis, and the bases corresponding to the X ninth coefficients are spatial domain bases, frequency domain bases, or spatial-frequency joint bases.

Based on the fifth aspect or the sixth aspect, in a possible implementation, the transceiver module is further configured to:
receive first configuration information from the second communication apparatus, where the first configuration information indicates P second port groups, and the N first port groups are determined based on the P second port groups.

Based on the seventh aspect or the eighth aspect, in a possible implementation, the transceiver module is further configured to:
send first configuration information to the first communication apparatus, where the first configuration information indicates P second port groups, and the N first port groups are determined based on the P second port groups.

Based on the fifth aspect, in a possible implementation, the processing module is specifically configured to: determine the P second port groups based on the first configuration information; and determine the N first port groups based on a preset rule and the P second port groups.

Based on the sixth aspect, in a possible implementation, the processing module is specifically configured to: determine channel information of the P second port groups based on the first configuration information and the channel information of the plurality of reference signal ports; and determine the channel information of the N first port groups based on a preset rule and the channel information of the P second port groups.

Based on any one of the fifth aspect to the eighth aspect, in a possible implementation, the first configuration information includes a quantity of the plurality of reference signal ports and a code division multiplexing type used by the plurality of reference signal ports, and a value of P is any one of the following:
a ratio of the quantity of the plurality of reference signal ports to a quantity of reference signal ports using time-domain code division indicated by the code division multiplexing type; the quantity of reference signal ports using time-domain code division indicated by the code division multiplexing type; a ratio of the quantity of the plurality of reference signal ports to a quantity of code division multiplexing groups, where the quantity of code division multiplexing groups is equal to a ratio of the quantity of the plurality of reference signal ports to a quantity of reference signal ports included in each code division multiplexing group indicated by the code division multiplexing type; a product of the quantity of code division multiplexing groups and the quantity of reference signal ports using time-domain code division indicated by the code division multiplexing type; or the quantity of code division multiplexing groups.

Based on any one of the fifth aspect to the eighth aspect, in a possible implementation, reference signal ports in the P second port groups are obtained by evenly grouping the plurality of reference signal ports in ascending order of port numbers of the reference signal ports based on a quantity of the P second port groups.

Based on the fifth aspect or the sixth aspect, in a possible implementation, the transceiver module is further configured to receive second configuration information from the second communication apparatus, where the second configuration information is used to configure the first weight.

Based on the seventh aspect or the eighth aspect, in a possible implementation, the transceiver module is further configured to send second configuration information to the first communication apparatus, where the second configuration information is used to configure the first weight.

Based on any one of the fifth aspect to the eighth aspect, in a possible implementation, the first weight is determined by the first communication apparatus.

Based on the fifth aspect or the sixth aspect, in a possible implementation, the first weight is a first codebook selected by the first communication apparatus from a codebook set. The transceiver module is further configured to send indication information to the second communication apparatus, where the indication information indicates the first codebook; or the indication information indicates a beam direction corresponding to the first weight, and the beam direction corresponding to the first weight is used by the second communication apparatus to determine the first codebook.

Based on the seventh aspect or the eighth aspect, in a possible implementation, the first weight is a first codebook selected by the first communication apparatus from a codebook set. The transceiver module is further configured to receive indication information from the first communication apparatus, where the indication information indicates the first codebook; or the indication information indicates a beam direction corresponding to the first weight, and the beam direction corresponding to the first weight is used by the second communication apparatus to determine the first codebook.

Based on any one of the fifth aspect to the eighth aspect, in a possible implementation, in the plurality of reference signal ports, a first part of reference ports correspond to a first polarization direction, and a second part of reference signal ports correspond to a second polarization direction. The first part of reference signal ports are first half of reference signal ports with smaller port numbers of reference signal ports in the plurality of reference signal ports, and the second part of reference signal ports are second half of reference signal ports with larger port numbers of reference signal ports in the plurality of reference signal ports.

Based on any one of the fifth aspect to the eighth aspect, in a possible implementation, one equivalent port corresponds to one digital port, and different equivalent ports correspond to different digital ports.

Based on any one of the fifth aspect to the eighth aspect, in a possible implementation, each of the plurality of reference signal ports corresponds to one analog port, and different reference signal ports correspond to different analog ports.

Based on any one of the fifth aspect to the eighth aspect, in a possible implementation, the first configuration information includes a quantity of the plurality of reference signal ports, a code division multiplexing type used by the plurality of reference signal ports, and a fifth coefficient, and a value of P is any one of the following: the quantity of the plurality of reference signal ports divided by a sum of the fifth coefficient and a quantity of reference signal ports using time-domain code division indicated by the code division multiplexing type; the quantity of reference signal ports using time domain code division indicated by the code division multiplexing type divided by the fifth coefficient; the quantity of the plurality of reference signal ports divided by a quantity of code division multiplexing groups, where the quantity of code division multiplexing groups is equal to a sum of the fifth coefficient and the quantity of the plurality of reference signal ports divided by a quantity of reference signal ports included in each code division multiplexing group indicated by the code division multiplexing type; the quantity of code division multiplexing groups is multiplied by the quantity of reference signal ports using time domain code division indicated by the code division multiplexing type, and then divided by the fifth coefficient; or the quantity of code division multiplexing groups divided by the fifth coefficient.

Based on any one of the fifth aspect to the eighth aspect, in a possible implementation, the first configuration information includes a sixth coefficient X, the sixth coefficient indicates that each of the P second port groups includes X reference signal ports, and the $i^{th}$ second port group in the P second port groups includes X reference signal ports with consecutive port numbers that start from and include the $(X*i)^{th}$ reference signal port in the plurality of reference signal ports, where i is an integer greater than or equal to 1 and less than or equal to P, and P is an integer greater than or equal to 1.

Based on any one of the fifth aspect to the eighth aspect, in a possible implementation, the first configuration information includes a seventh coefficient R, the seventh coefficient R indicates that a difference between port numbers of any two reference signal ports with adjacent port numbers that are included in each of the P second port groups is R, and a port number of a reference signal port in the $i^{th}$ second port group in the P second port groups is an integer multiple of i-1, where i is an integer greater than or equal to 1 and less than or equal to P, and R is an integer greater than or equal to 1.

According to a ninth aspect of this application, a communication apparatus is provided. The communication apparatus includes a processor. The processor is configured to invoke and run a computer program stored in a memory, to enable the processor to implement any one of the implementations of the first aspect to the fourth aspect.

Optionally, the communication apparatus further includes a transceiver. The processor is further configured to control the transceiver to transmit and receive a signal.

Optionally, the communication apparatus includes the memory. The memory stores the computer program.

According to a tenth aspect of this application, a computer program product including instructions is provided, and when the computer program product is run on a computer, the computer is enabled to perform any implementation of any one of the first aspect to the fourth aspect.

According to an eleventh aspect of this application, a computer-readable storage medium is provided, including computer instructions, and when the computer instructions are run on a computer, the computer is enabled to perform any implementation of any one of the first aspect to the fourth aspect.

According to a twelfth aspect of this application, a chip apparatus is provided, including a processor, configured to: connect to a memory, and invoke a program stored in the memory, to enable the processor to perform any implementation of any one of the first aspect to the fourth aspect.

According to a thirteenth aspect of this application, a communication system is provided. The communication system includes the first communication apparatus in the fifth aspect and the second communication apparatus in the sixth aspect; or the communication system includes the first communication apparatus in the seventh aspect and the second communication apparatus in the eighth aspect.

According to the foregoing technical solutions, it can be learned that embodiments of this application have the following advantages:

It can be learned from the foregoing technical solution that the terminal device receives the reference signal from the network device, and the reference signal corresponds to the plurality of reference signal ports. The terminal device determines the N first port groups based on the plurality of reference signal ports, where the plurality of reference signal ports include all reference signal ports in the N first port groups, different first port groups in the N first port groups include different reference signal ports, and N is an integer greater than or equal to 1. The terminal device determines the channel state information of the N equivalent ports under the first weight based on the first weight and the channel information of the N first port groups, where the N first port groups are in one-to-one correspondence with the N equivalent ports. The terminal device sends the first channel state information to the network device, where the first channel state information is determined based on the channel state information of the N equivalent ports under the first weight, or the first channel state information includes the channel state information of the N equivalent ports under the first weight. It can be learned that the terminal device determines the channel state information of the N equivalent ports under the first weight based on the first weight and the channel information of the N first port groups. The channel information of the N first port groups is more complete channel information. The terminal device may determine the channel state information of the N equivalent ports under the first weight based on the first weight and the channel information of the N first port groups. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved.

**BRIEF DESCRIPTION OF DRAWINGS**

FIG. 1 is a diagram of a communication system according to an embodiment of this application;
FIG. 2 is another diagram of a communication system according to an embodiment of this application;
FIG. 3 is a diagram of a structure of a DBF architecture according to an embodiment of this application;
FIG. 4 is a diagram of a structure of an ABF architecture according to an embodiment of this application;
FIG. 5 is a diagram of a first structure of an HBF architecture according to an embodiment of this application;
FIG. 6 is a diagram of a second structure of an HBF architecture according to an embodiment of this application;
FIG. 7a is a diagram of sending a reference signal by a network device by using a beam 1 according to an embodiment of this application;
FIG. 7b is a diagram of sending a reference signal by a network device by using a beam 2 according to an embodiment of this application;
FIG. 7c is a diagram of sending a reference signal by a network device by using a beam 3 according to an embodiment of this application;
FIG. 8 is a diagram of an embodiment of a channel state information sending method and a channel state information receiving method according to an embodiment of this application;
FIG. 9 is a third diagram of a structure of an HBF architecture according to an embodiment of this application;
FIG. 10 is a diagram of orthogonal codes loaded on eight reference signal ports according to an embodiment of this application;
FIG. 11a is a diagram of a first scenario of a channel state information sending method and a channel state information receiving method according to an embodiment of this application;
FIG. 11b is a diagram of a second scenario of a channel state information sending method and a channel state information receiving method according to an embodiment of this application;
FIG. 11c is a diagram of a third scenario of a channel state information sending method and a channel state information receiving method according to an embodiment of this application;
FIG. 12 is a diagram of a first structure of a communication apparatus according to an embodiment of this application;
FIG. 13 is a diagram of a second structure of a communication apparatus according to an embodiment of this application;
FIG. 14 is a diagram of a third structure of a communication apparatus according to an embodiment of this application;
FIG. 15 is a diagram of a fourth structure of a communication apparatus according to an embodiment of this application; and
FIG. 16 is a diagram of a fifth structure of a communication apparatus according to an embodiment of this application.

DESCRIPTION OF EMBODIMENTS

Embodiments of this application provide a channel state information sending method, a channel state information receiving method, and an apparatus, to improve efficiency of obtaining channel state information by a network device.

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a mobile communication system after a 5G network (for example, a 6G mobile communication system), and a vehicle-to-everything (vehicle-to-everything, V2X) communication system.

The communication system to which this application is applicable includes the terminal device and the network device. The following describes the terminal device and the network device in this application.

The terminal device may be a wireless terminal device that can receive scheduling and indication information from the network device. The wireless terminal device may be a device that provides a user with voice and/or data connectivity, a handheld device with a wireless connection function, or another processing device connected to a wireless modem.

A terminal device, also referred to as user equipment (user equipment, UE), a mobile station (mobile station, MS), a mobile terminal (mobile terminal, MT), a customer premises equipment (customer-premises equipment, CPE), or the like, is a device that includes a wireless communication function (providing voice/data connectivity for a user), for example, a handheld device or a vehicle-mounted device that has a wireless connection function. Currently, some examples of terminal devices are: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control, a wireless terminal in the Internet of Vehicles, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the Internet of Vehicles may be an in-vehicle device, an entire vehicle device, an in-vehicle module, a vehicle, or the like. The wireless terminal in industrial control may be a camera, a robot, or the like. The wireless terminal in the smart home may be a television, an air conditioner, a sweeper, a speaker, a set-top box, or the like.

The network device may be a device in a wireless network. For example, the network device is a device that is deployed in a radio access network and that provides a wireless communication function for the terminal device. For example, the network device may be a radio access network (radio access network, RAN) node that accesses the terminal device to the wireless network, and may also be referred to as an access network device.

The network device includes but is not limited to: a base transceiver station (base transceiver station, BTS) in a global system for mobile communications (global system for mobile communications, GSM) or a code division multiple access (code division multiple access, CDMA) network, or may be a NodeB (NodeB, NB) in wideband code division multiple access (wideband code division multiple access, WCDMA), or may be an evolved NodeB (evolved NodeB, eNB), a radio network controller (radio network controller, RNC), an NB, a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system; or one antenna panel or a group of (including a plurality of antenna panels) antenna panels of a base station in the 5G mobile communication system. Alternatively, the network device may be a network node that forms a gNB or a transmission point, for example, a baseband unit (baseband unit, BBU) or a distributed unit (distributed unit, DU).

In some deployments, a gNB may include a central unit (centralized unit, CU) and a DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. The information at the RRC layer is finally changed to the information at the PHY layer, or is changed from the information at the PHY layer. Therefore, in this architecture, the higher layer signaling (for example, the RRC layer signaling) may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The following describes two possible communication systems to which this application is applicable. This application is also applicable to another communication system. This is not specifically limited in this application.

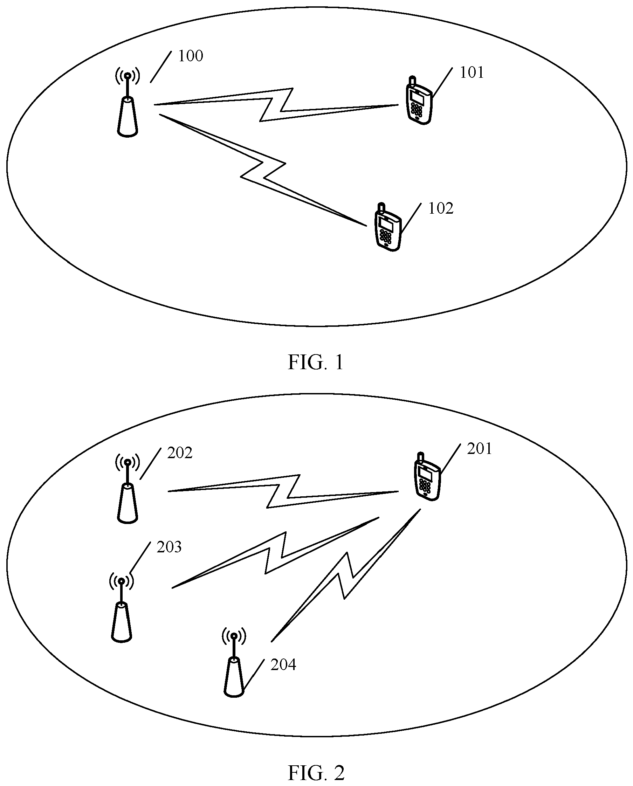

FIG. 1 is a diagram of a communication system according to an embodiment of this application. Refer to FIG. 1. The communication system includes at least one network device and at least one terminal device. As shown in FIG. 1, there is a network device 100, a terminal device 101, and a terminal device 102. The network device 100 may separately perform communication transmission with the terminal device 101 and the terminal device 102.

FIG. 2 is another diagram of a communication system according to an embodiment of this application. Refer to FIG. 2. The communication system includes at least one network device and at least one terminal device. As shown in FIG. 2, there is a terminal device 201, a network device 202, a network device 203, and a network device 204. The terminal device 201 may perform communication transmission with a plurality of network devices, so that the plurality of network devices provide a communication service for one terminal device.

In a communication system, a network device usually transmits a signal through a large-scale antenna array. In this way, the network device uses a high antenna array gain to counteract a path loss caused by an increase of a frequency band, to improve a coverage capability. From a perspective of an implementation of the network device, according to a beamforming implementation solution, there may be roughly three array weighting manners: DBF, ABF, and HBF.

The following describes a DBF architecture, an ABF architecture, and an HBF architecture.

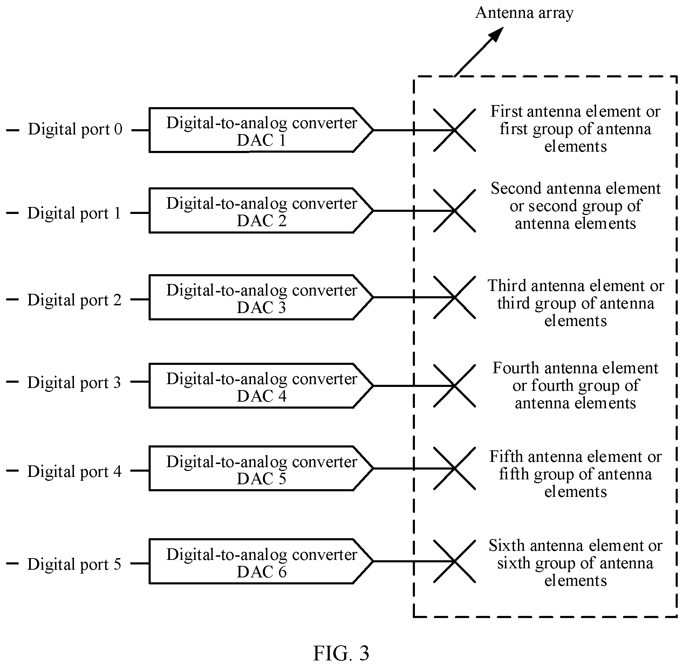

FIG. 3 is a diagram of a structure of the DBF architecture according to an embodiment of this application. Refer to FIG. 3. In the DBF architecture, each antenna element or each group of antenna elements is connected to one digital-to-analog converter, and one digital-to-analog converter is connected to one digital port. The antenna element includes a transmit antenna. In the DBF architecture, the network device weights, in a digital domain, an antenna signal on each digital port. For example, as shown in FIG. 3, the network device converts a digital domain signal on a digital port 0 into an analog domain signal by using a digital-to-analog converter 1, and then sends a weighted analog domain signal through an antenna element or a group of antenna elements connected to the digital-to-analog converter 1. Generally, the architecture shown in FIG. 3 may be applied to a low-frequency communication system.

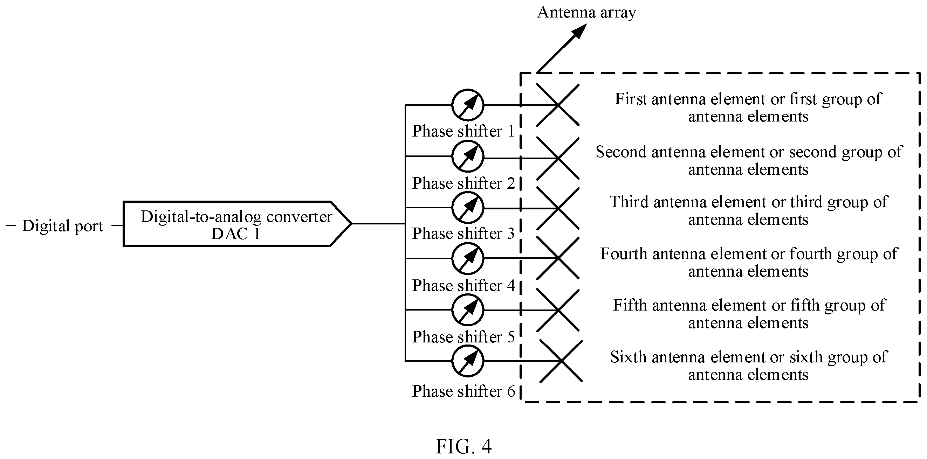

FIG. 4 is a diagram of a structure of the ABF architecture according to an embodiment of this application. Refer to FIG. 4. Each antenna element or each group of antenna elements is connected to one phase shifter. The antenna element includes a transmit antenna. Phase shifters that are connected to a plurality of antenna elements or a plurality of groups of antenna elements are connected in parallel to one digital-to-analog converter. That is, an antenna array corresponds to only one digital-to-analog converter, and the digital-to-analog converter corresponds to one digital port.

Weights loaded on the phase shifters that are connected to the plurality of antenna elements or the plurality of groups of antenna elements determine a beam direction obtained by beamforming. In the ABF architecture, a corresponding weight should be configured for each phase shifter. A signal output by the digital-to-analog converter is weighted by a mobile device, and then transmitted by a corresponding antenna element. A signal transmitted by the corresponding antenna element is a signal in the beam direction obtained by beamforming. The beam direction obtained by beamforming points to a target terminal device.

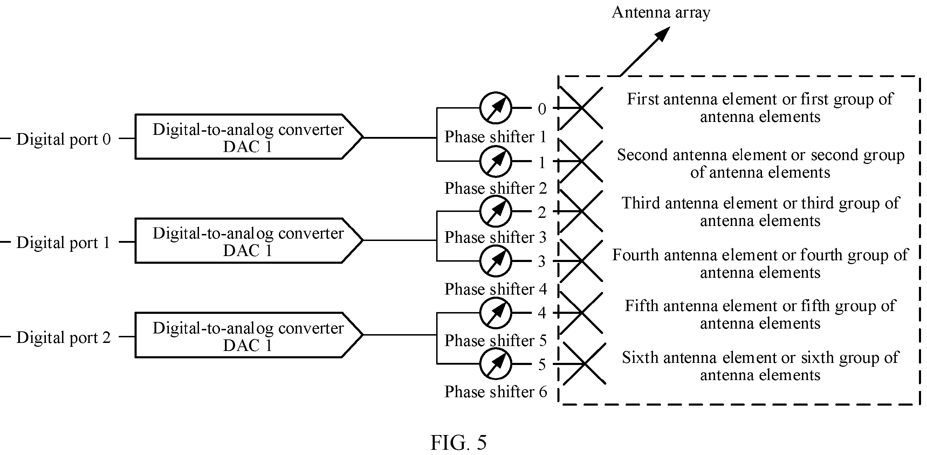

FIG. 5 is a diagram of a structure of the HBF architecture according to an embodiment of this application. The HBF architecture includes a plurality of digital ports. In FIG. 5, an example in which the DBF architecture includes three digital ports (a digital port 0 to a digital port 3) is used for description. As shown in FIG. 5, each antenna element or each group of antenna elements is connected to one phase shifter. The antenna element includes a transmit antenna. A phase shifter 1 and a phase shifter 2 are connected in parallel to a digital-to-analog converter 1. A phase shifter 3 and a phase shifter 4 are connected in parallel to a digital-to-analog converter 2. A phase shifter 5 and a phase shifter 6 are connected in parallel to a digital-to-analog converter 3. The first antenna element or the first group of antenna elements and the second antenna element or the second group of antenna elements form an antenna subarray 1. The third antenna element or the third group of antenna elements and the fourth antenna element or the fourth antenna element or the fourth group of antenna elements form an antenna subarray 2. The fifth antenna element or the fifth group of antenna elements and the sixth antenna element or the sixth group of antenna elements form an antenna subarray 3. Each digital port corresponds to two phase shifters. It can be learned from FIG. 5 that each digital port drives one antenna bay. For example, the digital port 0 drives the antenna subarray 1, the digital port 2 drives the antenna subarray 2, and the digital port 3 drives the antenna subarray 3. Compared with the ABF architecture, when scales of antenna arrays are the same, each digital port drives a larger scale of an antenna subarray. Therefore, a beam corresponding to a signal obtained by the network device through weighting by using two phase shifters corresponding to the digital port is wider, reliability is better, and beam scanning overheads are lower.

Optionally, in the HBF architecture, a ratio of a quantity of digital ports to a quantity of phase shifters is determined based on a frequency band used in a communication system and a system design requirement. For example, in a high-frequency communication system, there may be a small quantity of digital ports (for example, there may be 4 to 16 digital ports), and each digital port corresponds to a large quantity of phase shifters (for example, each digital port corresponds to 16 to 32 phase shifters). However, in a low-frequency communication system, there may be a large quantity of digital ports (for example, there may be 32 to 128 digital ports), and each digital port may correspond to a small quantity of phase shifters (for example, each digital port corresponds to 2 to 10 phase shifters).

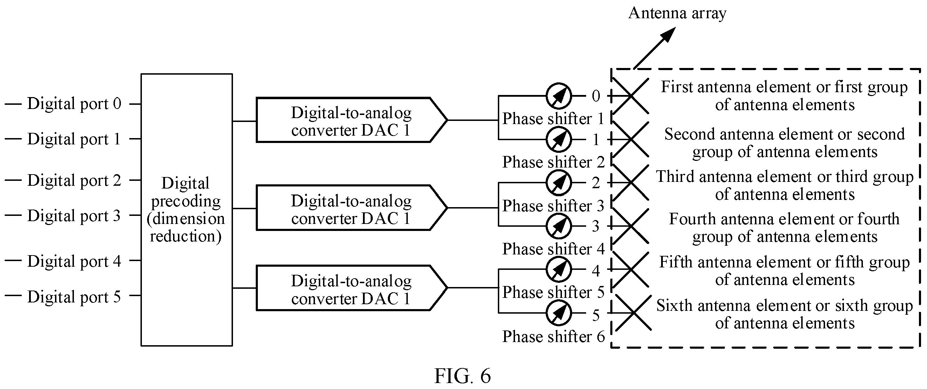

FIG. 6 is a diagram of another structure of the HBF architecture according to an embodiment of this application. Compared with the HBF architecture shown in FIG. 5, in the HBF architecture shown in FIG. 6, the network device may perform dimension reduction on the digital port through dimension reduction. As shown in FIG. 6, the network device may convert a digital port 0 to a digital port 5 into three dimension-reduced digital ports through dimension reduction. Each of the three dimension-reduced digital ports is connected to one digital-to-analog converter.

In this application, one digital-to-analog converter may correspond to one or more digital ports. For example, as shown in FIG. 5, each digital-to-analog converter corresponds to one digital port. As shown in FIG. 6, each digital-to-analog converter corresponds to two digital ports.

In this application, in phase shifters connected to each digital port, one or more phase shifters correspond to one analog port. The analog port may also be referred to as an analog port corresponding to the digital port. Each analog port corresponds to one reference signal port, and different analog ports correspond to different reference signal ports. That is, the network device maps each reference signal port in the plurality of reference signal ports to a corresponding analog port. One digital port corresponds to at least two analog ports, or one digital port corresponds to at least two reference signal ports.

For example, as shown in FIG. 5, the plurality of reference signal ports are a reference signal port 0 to a reference signal port 5. The digital port 0 corresponds to the reference signal port 0 and the reference signal port 1. The digital port 1 corresponds to the reference signal port 2 and the reference signal port 3. The digital port 2 corresponds to the reference signal port 4 and the reference signal port 5. For example, as shown in FIG. 4, the network device virtualizes a phase shifter 1, a phase shifter 2, and a phase shifter 3 into an analog port 1, and virtualizes a phase shifter 4, a phase shifter 5, and a phase shifter 6 into an analog port 2. That is, three phase shifters correspond to one analog port. The digital port in FIG. 4 corresponds to the analog port 1 and the analog port 2.

For the ABF and the HBF, signal quality of communication between devices is better only when a beam is aligned with a communication target (that is, a target terminal device). For a terminal device, a process in which the network device selects a beam for the terminal device may be referred to as beam scanning or beam training.

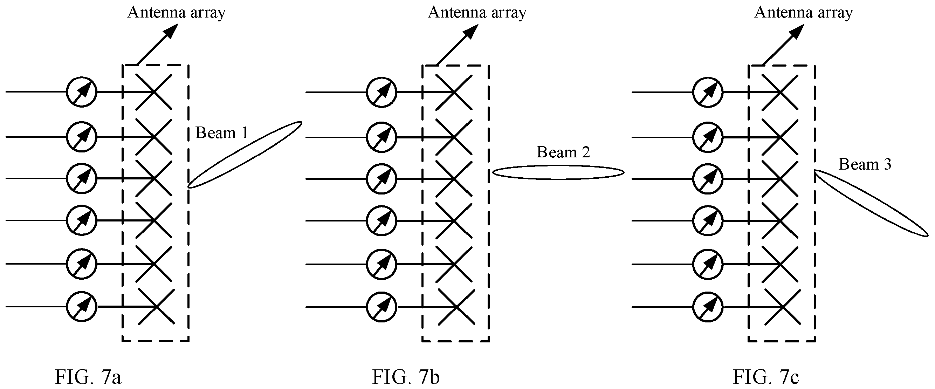

Beam scanning means that the network device separately sends reference signals by using different beams, and the terminal device separately measures the reference signals and feeds back measurement results, to assist the network device in determining a beam with best signal quality, and selecting the beam with the best signal quality for communication transmission between the network device and the terminal device. For example, as shown in FIG. 7a, the network device sends a reference signal by using a beam 1. The terminal device obtains channel state information of the beam 1 through measurement by using the reference signal. As shown in FIG. 7b, the network device sends a reference signal by using a beam 2. The terminal device obtains channel state information of the beam 2 through measurement by using the reference signal. As shown in FIG. 7c, the network device sends a reference signal by using a beam 3. The terminal device obtains channel state information of the beam 3 through measurement by using the reference signal.

In the foregoing technical solution, for each beam, the network device needs to separately send a corresponding reference signal. The terminal device measures a reference signal on each beam, and feeds back corresponding channel state information. That is, the network device can select only one beam and send a corresponding reference signal at a moment. Reference signals of different beams can be sent only in a time division sending manner. Consequently, efficiency of obtaining the channel state information by the network device is low.

Further, the network device needs to configure a plurality of resources, and each resource corresponds to one beam. The terminal device performs measurement on each resource, and feeds back corresponding channel state information. It can be learned that if a plurality of beams need to be measured, the network device needs to configure a plurality of resources, resulting in high resource overheads.

Further, the network device needs to separately send reference signals on the plurality of resources. That is, the network device needs to send the reference signal for a plurality of times. Consequently, the network device performs sending for a large quantity of times, causing high sending energy consumption. However, the terminal device needs to separately perform measurement on a plurality of resources, and separately feed back corresponding channel state information. Consequently, the terminal device performs measurement for a large quantity of times, and a large power consumption loss is caused to the terminal device. In addition, the terminal device needs to separately report channel state information obtained through measurement on the plurality of resources. Consequently, feedback overheads of the terminal device are high.

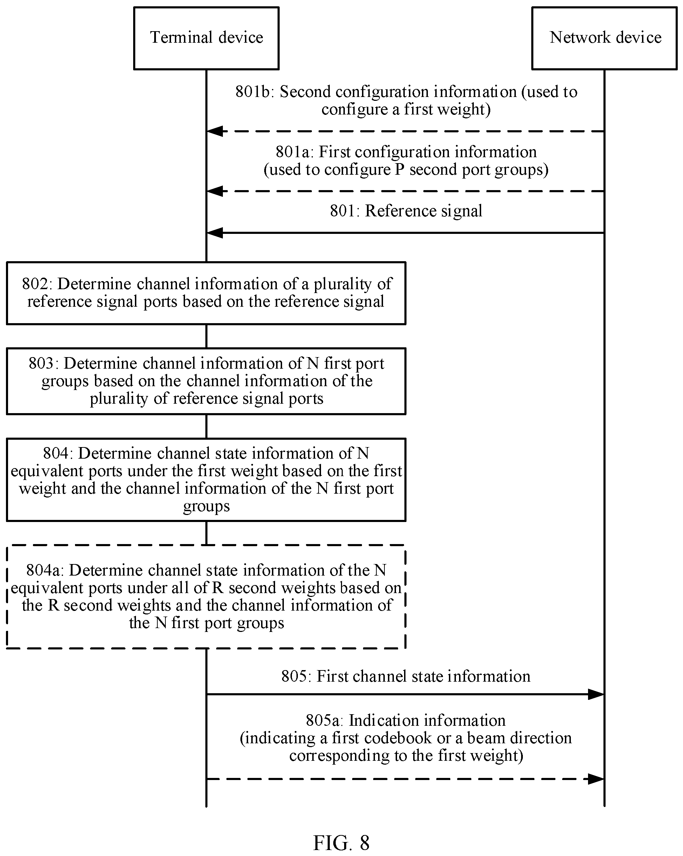

This application provides a corresponding technical solution, to improve efficiency of obtaining channel state information by the network device. Further, measurement resource overheads and feedback overheads are reduced, a quantity of measurement times of the terminal device is reduced, and a power consumption loss of the terminal device is reduced. For details, refer to related descriptions of the embodiment shown in FIG. 8 below.

Technical terms in this application are described below.

1. Beam (beam): The beam is a communication resource. The beam may be a wide beam, a narrow beam, or another type of beam, and a technology for forming the beam may be a beamforming technology or another technical means. The beamforming technology may be specifically a digital beamforming technology, an analog beamforming technology, and a hybrid digital/analog beamforming technology. Different beams may be considered as different resources.

In an NR protocol, the beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by a TCI-state parameter or a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a transmission configuration indicator (transmission configuration indicator, TCI) state (or referred to as a TCI-state, and specifically includes an uplink TCI-state and a downlink TCI-state), a spatial relationship, or the like. The foregoing terms are also equivalent to each other. Alternatively, the beam may be replaced with another term for representing the beam. This is not limited in this application. In this specification, two description manners of the TCI state and the TCI-state may be interchanged.

A beam for sending a signal may be referred to as a transmission beam (transmission beam, Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). The transmit beam may be indicated by the TCI-state.

A beam for receiving a signal may be referred to as a reception beam (reception beam, Rx beam), a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting).

Both the transmit beam and the receive beam may be indicated by any one of a spatial relationship, a transmission configuration indicator (transmission configuration indicator, TCI) state, or a sounding reference signal (sounding reference signal, SRS) resource (indicating a transmit beam using the SRS). Therefore, the transmit beam may alternatively be replaced with the SRS resource.

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be the wide beam, the narrow beam, or the another type of beam. The technology for forming the beam may be the beamforming technology or another technology. The beamforming technology may be specifically a digital beamforming technology, an analog beamforming technology, a hybrid digital beamforming technology, a hybrid analog beamforming technology, or the like.

The beam usually corresponds to a resource. For example, during beam measurement, a network device measures different beams using different resources, a terminal device feeds back resource quality obtained through the measurement, and the network device learns of quality of a corresponding beam. During data transmission, beam information is also indicated by a resource corresponding to the beam information. For example, the network device indicates, by using a TCI field in downlink control information (downlink control information, DCI), information about a beam used to transmit a physical downlink control channel (physical downlink shared channel, PDSCH) of the terminal device.

In a possible implementation, a plurality of beams that have same or similar communication features are considered as one beam. One beam may include one or more antenna ports for transmission of a data channel, a control channel, a sounding signal, and the like. The one or more antenna ports forming the beam may also be considered as one antenna port set.

2. A resource is a configuration information element, including a related parameter of a reference signal, for example, a sending periodicity and a used time-frequency resource location. Each beam corresponds to one resource, and a network device sends a reference signal corresponding to the resource by using a beam corresponding to one resource. The terminal device may determine quality of the beam or the resource by measuring the reference signal. Therefore, during beam measurement, a beam corresponding to a resource may be uniquely identified by using an index of the resource. The resource may be a resource of an uplink signal, or may be a resource of a downlink signal.

The resource is configured by using RRC signaling. In terms of a configuration structure, a resource is a data structure, and includes a related parameter of an uplink signal or a downlink signal corresponding to the resource. For example, for the uplink signal, the resource includes a type of the uplink signal, a resource granularity carrying the uplink signal, a sending time and periodicity of an uplink channel, and a port used to send the uplink signal. For the downlink signal, the resource includes a type of the downlink signal, a resource granularity for carrying the downlink signal, a sending time and periodicity of the downlink signal, a quantity of ports used to send the downlink signal, and the like. A resource of each uplink signal or a resource of each downlink signal has a unique index used to identify the resource. It may be understood that the index of the resource may also be referred to as an identifier of the resource. This is not limited in embodiments of this application.

3. Channel state information (channel state information, CSI): information that is reported by a receiving end (for example, a terminal device) to a transmitting end (for example, a network device) in a wireless communication system and that describes a channel attribute of a wireless communication link between the transmitting end and the receiving end. The CSI may include, but not limited to, a precoding matrix indicator (PMI), a rank indicator (rank indicator, RI), a channel quality indicator (channel quality indicator, CQI), a channel state information reference signal (channel state information reference signal), a CSI-RS resource indicator (CSI-RS resource indicator, CRI), and a layer indicator (layer indicator, LI).

4. PMI: indicates a precoding matrix. The precoding matrix may be, for example, a precoding matrix determined by a terminal device based on a channel matrix of each frequency domain unit (for example, a frequency domain length of a frequency domain unit may be a subband, a resource block (resource block, RB), or R times of the subband, where $R \leq 1$, and a value of R may be 1 or 1/2). The channel matrix may be determined by the terminal device through channel estimation or the like or based on channel reciprocity. However, it should be understood that a specific method for determining the precoding matrix by the terminal device is not limited to the foregoing method, and is not enumerated herein.

For example, the precoding matrix may be obtained by performing singular value decomposition (singular value decomposition, SVD) on a channel matrix or a covariance matrix of a channel matrix, or may be obtained by performing eigenvalue decomposition (eigenvalue decomposition, EVD) on a covariance matrix of a channel matrix. It should be understood that the foregoing listed manners of determining the precoding matrix are merely examples, and should not constitute any limitation on this application. The manners are not enumerated herein.

It should be noted that the precoding matrix may be directly used for downlink data transmission. Alternatively, some beamforming methods, including, for example, zero forcing (zero forcing, ZF), regularized zero-forcing (regularized zero-forcing, RZF), a minimum mean-square error (minimum mean-squared error, MMSE), and a maximum signal-to-leakage-and-noise ratio (signal-to-leakage-and-noise, SLNR), may be performed to obtain a precoding matrix that is finally used for downlink data transmission. This is not limited in this application. Unless specifically described, all precoding matrices below may be precoding matrices determined based on the method provided in this application.

It may be understood that the precoding matrix determined by the terminal device may be understood as a to-be-fed-back precoding matrix. The terminal device may indicate the to-be-fed-back precoding matrix by using the PMI, so that the network device restores the precoding matrix based on the PMI. It may be understood that the precoding matrix restored by the network device based on the PMI may be the same as or similar to the to-be-fed-back precoding matrix.

In downlink channel measurement, higher approximation between a precoding matrix determined by the network device based on the PMI and a precoding matrix determined by the terminal device indicates that the precoding matrix determined by the network device for data transmission is more adaptable to a channel state. In this way, signal receive quality can be improved.

5. Antenna port: may be understood as a transmit antenna identified by a receiving device, or a receive antenna that can be identified by a transmitting device, or a transmit antenna or a receive antenna that can be distinguished in space, and may be referred to as a physical antenna herein.

6. Reference signal port: A reference signal port may be understood as a virtual antenna or a logical antenna, and may be a weighted combination of a plurality of physical antennas. A weighting coefficient of a reference signal port is related to a precoding matrix loaded on a reference signal. If the precoding matrix loaded on the reference signal may be an identity matrix, one antenna port is configured for each virtual antenna, each virtual antenna corresponds to one physical antenna, and each antenna port may correspond to one reference signal or one reference signal port. If the precoding matrix loaded on the reference signal is not an identity matrix, a plurality of antenna ports are configured for one virtual antenna, one virtual antenna corresponds to a plurality of physical antennas, and the plurality of antenna ports may correspond to one reference signal or one reference signal port. For example, if the reference signal is a CSI-RS, the reference signal port may be referred to as a CSI-RS port. If the reference signal is a demodulation reference signal (demodulation reference signal, DMRS), the reference signal port may be referred to as a DMRS port.

7. Frequency domain unit: The frequency domain unit is a unit of a frequency domain resource, and may represent different frequency domain resource granularities. The frequency domain unit may include, for example, but is not limited to, a subband (subband), a resource block (resource block, RB), a subcarrier, a resource block group (resource block group, RBG), or a precoding resource block group (precoding resource block group, PRG). In addition, a frequency domain length of a frequency domain unit may be Y times of a CQI subband, where $Y \leq 1$, and a value of Y may be 1 or 1/2.

8. Spatial domain basis vector: may also be referred to as a beam vector, a spatial domain vector, or a spatial domain beam basis vector. One or more spatial domain basis vectors form a spatial domain basis. Each spatial domain basis vector corresponds to one transmit beam of a transmitting end device, and each element in the spatial domain basis vector may be represented as a weight of each antenna port. Based on weights of all antenna ports represented by all elements in the spatial domain basis vector, signals of all the antenna ports are linearly superimposed to form a region with stronger signals in a direction in space. Optionally, the spatial domain basis vector is obtained from a two-dimensional discrete Fourier transform (discrete Fourier transform, DFT) matrix. Each column vector in the two-dimensional DFT matrix may be referred to as a two-dimensional DFT vector. In other words, the spatial domain basis vector may be a two-dimensional DFT vector, and the two-dimensional DFT vector may be usually used to describe a beam obtained by superposing a beam in a horizontal direction and a beam in a vertical direction.

9. Spatial domain basis: formed by one or more spatial domain basis vectors.

10. Frequency domain basis vector: may also be referred to as a frequency domain vector, and is a vector that may indicate a change rule of a channel in frequency domain. One or more frequency domain basis vectors form a frequency domain basis. Each frequency-domain basis vector may represent one change rule. When a signal is transmitted on a radio channel, the signal may arrive at a receive antenna through a plurality of paths from a transmit antenna. Frequency selective fading caused by a multipath delay is a change of a frequency domain channel. Therefore, change rules, caused by delay on different transmission paths, of channels in frequency domain may be represented by using different frequency domain basis vectors. Optionally, the frequency domain basis vector may be selected as a DFT matrix or an inverse discrete Fourier transform (inverse discrete Fourier transform, IDFT) matrix (that is, a conjugate transposition matrix of the DFT matrix). In other words, the frequency domain basis vector may be a DFT vector or an IDFT vector.

A length of the frequency domain basis vector may be determined by a quantity of to-be-reported frequency domain units that is preconfigured in a reporting bandwidth, or may be determined by a length of the reporting bandwidth, or may be a value predefined in a protocol. The length of the frequency domain basis vector is not limited in this application. The reporting bandwidth may be a CSI reporting bandwidth (CSI-ReportingBand) carried in a CSI reporting configuration in higher layer signaling (for example, an RRC message).

11. Frequency domain basis: formed by one or more frequency domain basis vectors.

12. Spatial-frequency basis vector: uniquely determined by a spatial-domain basis vector and a frequency-domain basis vector. For example, a spatial-frequency basis vector may be a vector formed by a spatial domain basis vector and a frequency domain basis vector by using a Kronecker (Kronecker) product. If a transmit antenna of a network device is a single-polarized antenna, a spatial-frequency basis vector has a row quantity of $(M1 \times M2) \times Nf$ and a column quantity of 1, or has a row quantity of 1 and a column quantity of $(M1 \times M2) \times Nf$. M1 is a quantity of transmit antenna ports of the network device in a horizontal direction, M2 is a quantity of transmit antenna ports of the network device in a vertical direction, and Nf is a quantity of frequency domain units. It should be understood that, if a transmit antenna of the network device is a dual-polarized antenna, a spatial-frequency basis vector has a row quantity of $2 \times (M1 \times M2) \times Nf$ and a column quantity of 1, or has a row quantity of 1 and a column quantity of $2 \times (M1 \times M2) \times Nf$.

13. Spatial-frequency joint basis: formed by one or more spatial-frequency basis vectors.

14. Configuration information of a reference signal: includes a related parameter of the reference signal, for example, a sending periodicity of the reference signal, a sending time of the reference signal, a time-frequency resource used for the reference signal, a type of the reference signal, a quantity of reference signal ports used to send the reference signal, a code division multiplexing type, time-frequency information of a code division multiplexing group, an index of a code division multiplexing group, frequency domain resource index information in a code division multiplexing group, and time domain resource index information in a code division multiplexing group.

14. Related definitions of mathematical symbols in this application include:

$\mathbf{A}^T$ : represents a transposition of a matrix A .

$\mathbf{A}^H$ : represents a conjugate transposition of a matrix A .

The following describes some possible forms of a code division multiplexing type.

1. noCDM: represents no code division multiplexing.

2. Frequency domain code division: denoted as -FD# or fd-CDM#, where # is a number, and indicates that # reference signal ports in a code division multiplexing (code division multiple, CDM) group are code-division multiplexed in frequency domain.

3. Time domain code division: denoted as -TD# or td-CDM#, where # is a number, and indicates that # reference signal ports in a CDM group are code-division multiplexed in time domain.

The foregoing code division multiplexing types may be combined. For example, cdm-FD2-TD2 indicates that one CDM group includes four reference signal ports, orthogonal codes on two reference signal ports are code-division multiplexed in frequency domain, and orthogonal codes on two reference signal ports are code-division multiplexed in time domain.

The following describes the technical solutions of this application with reference to specific embodiments.

FIG. 8 is a diagram of an embodiment of a channel state information sending method and a channel state information receiving method according to an embodiment of this application. Refer to FIG. 8. The method includes the following steps.

801: A network device sends a reference signal to a terminal device, where the reference signal corresponds to a plurality of reference signal ports. Correspondingly, the terminal device receives the reference signal from the network device.

Optionally, the plurality of reference signal ports are configured in configuration information of the reference signal. The network device may send the reference signal through the plurality of reference signal ports. Optionally, the network device may send the configuration information of the reference signal to the terminal device, so that the terminal device receives the reference signal.

Optionally, each of the plurality of reference signal ports corresponds to one analog port, and different reference signal ports correspond to different analog ports. It can be learned from the foregoing descriptions that one digital port corresponds to at least two reference signal ports, and different digital ports correspond to different reference signal ports. A digital signal on one digital port may be weighted by using the at least two reference signal ports to obtain a signal in a beam direction of beamforming.

Optionally, the reference signal is sent in a full-dimension direction.

In one aspect, the network device may send the reference signal in the full-dimension direction. Therefore, the terminal device obtains more complete channel information. In another aspect, the network device may map each of the plurality of reference signal ports to one analog port, and map different reference signal ports to different analog ports. Therefore, the terminal device obtains channel information on each analog port, that is, channel information on each reference signal port.

The following describes a possible implementation in which the network device sends the reference signal. This application is also applicable to another implementation. This is not specifically limited in this application.

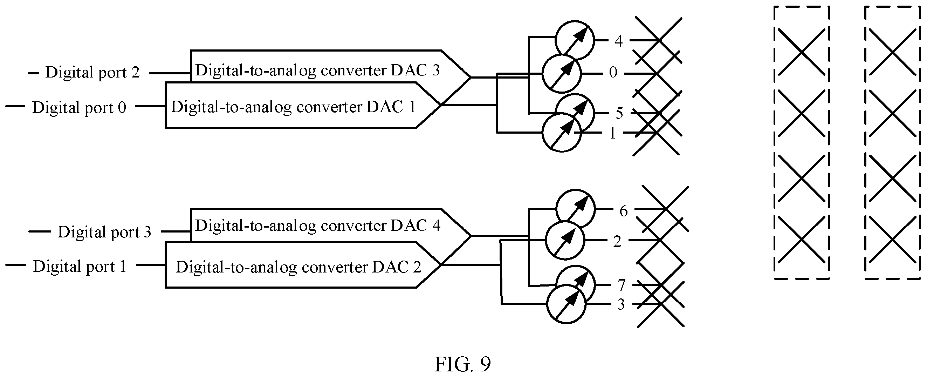

For example, as shown in FIG. 9, the reference signal corresponds to eight reference signal ports: a reference signal port 0 to a reference signal port 7. The network device processes a signal on the reference signal ports by using a code division multiplexing type cdm4-FD2-TD2. cdm 4-FD2-TD2 indicates that one CDM group includes four reference signal ports, two reference signal ports are code division orthogonal in frequency domain, and two reference signal ports are code division orthogonal in time domain.

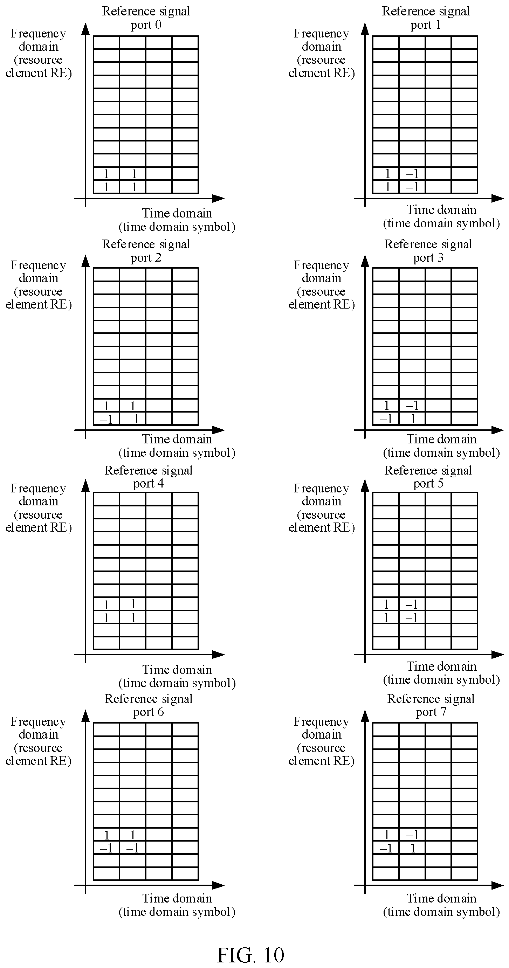

As shown in FIG. 10, the network device uses an orthogonal code corresponding to each reference signal port as a weight of a phase shifter connected to the reference port, and performs weighting on a signal on the reference signal port by using the phase shifter. It can be learned from FIG. 10 that, an orthogonal code corresponding to the reference signal port 0 and an orthogonal code corresponding to the reference signal port 1 are code division orthogonal in time domain. The orthogonal code corresponding to the reference signal port 0 and an orthogonal code corresponding to the reference signal port 2 are code division orthogonal in frequency domain. The orthogonal code corresponding to the reference signal port 2 and an orthogonal code corresponding to the reference signal port 3 are code division orthogonal in frequency domain. The orthogonal code corresponding to the reference signal port 4 and an orthogonal code corresponding to the reference signal port 5 are code division orthogonal in time domain. The orthogonal code corresponding to the reference signal port 4 and an orthogonal code corresponding to the reference signal port 6 are code division orthogonal in frequency domain. The orthogonal code corresponding to the reference signal port 6 and an orthogonal code corresponding to the reference signal port 7 are code division orthogonal in frequency domain. That is, in reference signal ports corresponding to a same digital port, orthogonal codes corresponding to different reference signal ports are code division orthogonal in time domain. Therefore, the network device can map each of the plurality of reference signal ports to one analog port. Further, after the terminal device receives the reference signal, the terminal device may obtain channel information on each reference signal port by parsing the orthogonal code of each reference signal port.

Optionally, the reference signal is a CSI-RS or a DMRS. If the reference signal is the CSI-RS, the reference signal port may be referred to as a CSI-RS port. If the reference signal is the DMRS, the reference signal port may be referred to as a DMRS port.

Optionally, in the plurality of reference signal ports, a first part of reference signal ports correspond to a first polarization direction, and a second part of reference signal ports correspond to a second polarization direction.

The first part of reference signal ports are first half of reference signal ports with smaller port numbers in the plurality of reference signal ports. The second part of reference signal ports are second half of reference signal ports with larger port numbers in the plurality of reference signal ports.

For example, as shown in FIG. 9, the first part of reference signal ports include the reference signal port 0 to the reference signal port 3. The second part of reference signal ports include the reference signal port 4 to the reference signal port 7. The network device sends the reference signal in the first polarization direction through the reference signal port 0 to the reference signal port 3, and sends the reference signal in the second polarization direction through the reference signal port 4 to the reference signal port 7. Therefore, the terminal device performs measurement on channels in different polarization directions.

It should be noted that the first part of reference signal ports and the second part of reference signal ports may alternatively be obtained by dividing the plurality of reference signal ports in another manner. The foregoing example is not a limitation on this application, and is not specifically limited in this application. For example, the first part of reference signal ports are reference signal ports with odd port numbers in the plurality of reference signal ports. The second part of reference signal ports are reference signal ports with even port numbers in the plurality of reference signal ports.

802: The terminal device determines channel information of the plurality of reference signal ports based on the reference signal.

Specifically, the terminal device may determine the channel information of the plurality of reference signal ports by using the reference signal and the orthogonal code corresponding to each of the plurality of reference signal ports.

For example, as shown in FIG. 9, the terminal device multiplies the received reference signal by the orthogonal code of the reference signal port 0, to obtain channel information of the reference signal port 0. Channel information of other reference signal ports is similar, and the terminal device may determine the channel information of each reference signal port.

803: The terminal device determines channel information of N first port groups based on the channel information of the plurality of reference signal ports.

The plurality of reference signal ports include all reference signal ports in the N first port groups. Different first port groups in the N first port groups include different reference signal ports. N is an integer greater than or equal to 1.

It should be noted that, all the reference signal ports in the N first port groups may be the plurality of reference signal ports or may be a proper subset of the plurality of reference signal ports. This is not specifically limited in this application.

Optionally, each of the N first port groups corresponds to one or more digital ports, and the one or more digital ports correspond to a same digital-to-analog converter.

For example, as shown in FIG. 5, the N first port groups include three first port groups. The 1st first port group includes the reference signal port 0 and the reference signal port 1, the 2nd first port group includes the reference signal port 2 and the reference signal port 3, and the 3rd first port group includes the reference signal port 4 and the reference signal port 5.

It should be noted that, optionally, the N first port groups may also be determined by the terminal device, and the terminal device needs to report grouping information of each of the N first port groups, for example, a reference signal port or a quantity of reference signal ports included in each first port group. The network device determines the N first port groups based on the grouping information that is of each of the N first port groups and that is reported by the terminal device.

Optionally, the embodiment shown in FIG. 8 further includes step 801a. Step 801a may be performed before step 803.

801a: The network device sends first configuration information to the terminal device. The first configuration information is used to configure P second port groups. Correspondingly, the terminal device receives the first configuration information from the network device.

The N first port groups are determined based on a preset rule and the P second port groups, and P is an integer greater than or equal to 1.

In a possible implementation, the preset rule includes: The N first port groups are in one-to-one correspondence with the P second port groups, and the N first port groups are the P second port groups.

For example, the N first port groups are the P second port groups. As shown in FIG. 5, the N first port groups include three first port groups. The 1st first port group includes the reference signal port 0 and the reference signal port 1, the 2nd first port group includes the reference signal port 2 and the reference signal port 3, and the 3rd first port group includes the reference signal port 4 and the reference signal port 5.

In another possible implementation, the preset rule includes: Each of the N first port groups corresponds to a plurality of second port groups in the P second port groups.

Optionally, the 1st reference signal port in each of the P second port groups forms the 1st first port group in the N first port groups. The 2nd reference signal port in each of the P second port groups forms the 2nd first port group in the N first port groups. By analogy, each second port group includes S reference signal ports, and S is an integer greater than or equal to 2. The Sth reference signal port in each of the P second port groups forms the Nth first port group.

For example, as shown in FIG. 5, the P second port groups include two second port groups. The 1st second port group includes the reference signal port 0, the reference signal port 2, and the reference signal port 4, and the 2nd second port group includes the reference signal port 1, the reference signal port 3, and the reference signal port 5. However, the N first port groups include three first port groups. The 1st first port group includes the reference signal port 0 and the reference signal port 1, the 2nd first port group includes the reference signal port 2 and the reference signal port 3, and the 3rd first port group includes the reference signal port 4 and the reference signal port 5.

The following describes a manner of determining the P second port groups.

Implementation 1: The first configuration information includes a quantity of the plurality of reference signal ports and a code division multiplexing type used by the plurality of reference signal ports.

The following describes some possible implementations of the value of P with reference to the two possible implementations of the preset rule.

If the N first port groups are P second port groups, a value of P is any one of the following:

a. A ratio of the quantity of the plurality of reference signal ports to a quantity of reference signal ports using time-domain code division indicated by the code division multiplexing type:
For example, the quantity of the plurality of reference signal ports is 8, the code division multiplexing type is cdm4-TD2-FD2, and the quantity of reference signal ports using time-domain code division indicated by the code division multiplexing type is 2. Therefore, it can be learned that P is equal to 4.
b. A ratio of the quantity of the plurality of reference signal ports to a quantity of code division multiplexing groups, where the quantity of code division multiplexing groups is equal to the quantity of the plurality of reference signal ports divided by a quantity of reference signal ports included in each code division multiplexing group indicated by the code division multiplexing type:
For example, the quantity of the plurality of reference signal ports is 8, and the code division multiplexing type is cdm4-TD2-FD2. Therefore, it can be learned that each code division multiplexing group includes four reference signal ports. Therefore, the quantity of code division multiplexing groups is 2, and P is equal to 4.
c. The quantity of code division multiplexing groups multiplied by the quantity of reference signal ports using time-domain code division indicated by the code division multiplexing type:
For example, the quantity of the plurality of reference signal ports is 8, and the code division multiplexing type is cdm4-TD2-FD2. It can be learned that each code division multiplexing group includes four reference signal ports. Therefore, the quantity of code division multiplexing groups is 2. The quantity of reference signal ports using time-domain code division indicated by the code division multiplexing type is 2. Therefore, P is equal to 4.

2. If each of the N first port groups corresponds to a plurality of second port groups in the P second port groups, a value of P is any one of the following:

a. The quantity of reference signal ports using time-domain code division indicated by the code division multiplexing type:
For example, the quantity of the plurality of reference signal ports is 8, and the code division multiplexing type is cdm4-TD2-FD2. Therefore, the quantity of reference signal ports using time-domain code division indicated by the code division multiplexing type is 2. Therefore, P is equal to 2.
b. The quantity of code division multiplexing groups:
For example, the quantity of the plurality of reference signal ports is 8, and the code division multiplexing type is cdm4-TD2-FD2. Therefore, if the quantity of reference signal ports using time-domain code division indicated by the code division multiplexing type is 2, the quantity of code division multiplexing groups is 2. Therefore, P is equal to 2.

Implementation 2: The first configuration information includes the quantity of the plurality of reference signal ports, the code division multiplexing type used by the plurality of reference signal ports, and a fifth coefficient.

In Implementation 2, in actual application, not all second port groups including the plurality of reference signal ports are weighted in an analog domain. Therefore, the network device may configure the fifth coefficient, so that the terminal device can determine, by using the fifth coefficient, the P second port groups that are weighted in the analog domain.

The following describes some possible implementations of the value of P with reference to the two possible implementations of the preset rule.

If the N first port groups are P second port groups, a value of P is any one of the following:

a. A ratio of the quantity of the plurality of reference signal ports to a sum of the fifth coefficient and a quantity of reference signal ports using time-domain code division indicated by the code division multiplexing type:
For example, the quantity of the plurality of reference signal ports is 8, the code division multiplexing type is cdm4-TD2-FD2, the quantity of reference signal ports using time-domain code division indicated by the code division multiplexing type is 2, and the first coefficient is 2. Therefore, it can be learned that P is equal to 2.
b. A ratio of the quantity of the plurality of reference signal ports to a sum of a quantity of code division multiplexing groups and the first coefficient:
The quantity of code division multiplexing groups is equal to a ratio of the quantity of the plurality of reference signal ports to a quantity of reference signal ports included in each code division multiplexing group indicated by the code division multiplexing type.

For example, the quantity of the plurality of reference signal ports is 8, and the code division multiplexing type is cdm4-TD2-FD2. Therefore, it can be learned that each code division multiplexing group includes four reference signal ports. Therefore, the quantity of code division multiplexing groups is 2, the first coefficient is 2, and P is equal to 2.

c. The quantity of code division multiplexing groups multiplied by the quantity of reference signal ports using time-domain code division indicated by the code division multiplexing type, and then divided by the fifth coefficient:
For example, the quantity of the plurality of reference signal ports is 8, and the code division multiplexing type is cdm4-TD2-FD2. It can be learned that each code division multiplexing group includes four reference signal ports. Therefore, the quantity of code division multiplexing groups is 2. The quantity of reference signal ports using time-domain code division indicated by the code division multiplexing type is 2, and the first coefficient is 2. Therefore, P is equal to 2.

2. If each of the N first port groups corresponds to a plurality of second port groups in the P second port groups, a value of P is any one of the following:

a. Quantity of reference signal ports using time-domain code division indicated by the code division multiplexing type divided by the fifth coefficient:
For example, the quantity of the plurality of reference signal ports is 8, and the code division multiplexing type is cdm4-TD2-FD2. It can be learned that the quantity of reference signal ports using time-domain code division indicated by the code division multiplexing type is 2, and the fifth coefficient is 1. Therefore, P is equal to 2.
b. Quantity of code division multiplexing groups divided by the fifth coefficient:
For example, the quantity of the plurality of reference signal ports is 8, and the code division multiplexing type is cdm4-TD2-FD2. Therefore, if the quantity of reference signal ports using time-domain code division indicated by the code division multiplexing type is 2, the quantity of code division multiplexing groups is 2, and the fifth coefficient is 2. Therefore, P is equal to 1.

In Implementation 1 and Implementation 2, the network device may indirectly indicate the quantity of the P second port groups by using the configuration information of the reference signal.

It should be noted that, optionally, in Implementation 1 and Implementation 2, the reference signal ports in the P second port groups are obtained by evenly grouping the plurality of reference signal ports in ascending or descending order of port numbers of the reference signal ports based on the quantity of the P second port groups. For example, as shown in FIG. 5, the P second port groups include three second port groups. The plurality of reference signal ports include six reference signal ports. Therefore, the 1st second port group includes the reference signal port 0 and the reference signal port 1. The 2nd second port group includes the reference signal port 2 and the reference signal port 3. The 3rd second port group includes the reference signal port 4 and the reference signal port 5. In actual application, the reference signal ports in the P second port groups are obtained by dividing the plurality of reference signal ports in another order of port numbers of the reference signal ports based on the quantity of the P second port groups. This is not specifically limited in this application.

Implementation 3: The first configuration information includes a sixth coefficient X. The sixth coefficient indicates that each of the P second port groups includes X reference signal ports, and the $i^{th}$ second port group in the P second port groups includes X reference signal ports with consecutive port numbers that start from and include the $(X*i)^{th}$ reference signal port in the plurality of reference signal ports, where i is an integer greater than or equal to 1 and less than or equal to P, and P is an integer greater than or equal to 1.

The sixth coefficient X indicates that, starting from a reference signal port with a smallest port number in the plurality of reference signal ports, every X reference signal ports with consecutive port numbers correspond to one second port group.

For example, as shown in FIG. 9, the plurality of reference signal ports include the reference signal port 0 to the reference signal port 3. If the sixth coefficient X is equal to 4, the reference signal port 0, the reference signal port 1, the reference signal port 2, and the reference signal port 3 form the 1st second port group. The reference signal port 4, the reference signal port 5, the reference signal port 6, and the reference signal port 7 form the 2nd second port group. That is, two second port groups are included in total.

Implementation 4: The first configuration information includes a seventh coefficient Y, the seventh coefficient Y indicates that a difference between port numbers of any two reference signal ports with adjacent port numbers that are included in each of the P second port groups is Y, and a port number of a reference signal port in the $i^{th}$ second port group in the P second port groups is an integer multiple of i-1, where i is an integer greater than or equal to 1 and less than or equal to P, and Y is an integer greater than or equal to 1.

The seventh coefficient Y indicates that, starting from a reference signal port with a smallest port number in the plurality of reference signal ports, reference signal ports at intervals of Y reference signal ports form one second port group.

For example, as shown in FIG. 9, the plurality of reference signal ports include the reference signal port 0 to the reference signal port 3. The seventh coefficient Y is equal to 2. Therefore, it can be learned that the reference signal port 0 and the reference signal port 2 form the 1st second port group, the reference signal port 1 and the reference signal port 5 form the 2nd second port group, the reference signal port 2 and the reference signal port 6 form the 3rd second port group, and the reference signal port 3 and the reference signal port 7 form the 4th second port group.

It can be learned from Implementation 3 and Implementation 4 that the network device may directly configure the quantity of the P second port groups.

Based on step 801a, optionally, step 803 specifically includes step 803a and step 803b.

803a: The terminal device determines channel information of the P second port groups based on the first configuration information and a channel of the plurality of reference signal ports.

For example, as shown in FIG. 9, the plurality of reference signal ports include the reference signal port 0 to the reference signal port 7. The P second port groups include four second port groups. The 1st second port group includes the reference signal port 0 and the reference signal port 2. The 2nd second port group includes the reference signal port 1 and the reference signal port 5. The 3rd second port group includes the reference signal port 2 and the reference signal port 6. The 4th second port group includes the reference signal port 3 and the reference signal port 7. After the terminal device determines the P second port groups, the terminal device may determine channel information of the reference signal port 1 and channel information of the reference signal port 2 as channel information of the 1st second port group. By analogy, the terminal device determines channel information of the reference signal port 3 and channel information of the reference signal port 7 as channel information of the 4th second port group.

For example, as shown in FIG. 9, the plurality of reference signal ports include the reference signal port 0 to the reference signal port 7. The P second port groups include two second port groups. Port numbers of reference signal ports in the 1st second port group are {0, 2, 4, 6}, and port numbers of reference signal ports in the 2nd second port group are {1, 3, 5, 7}. In this case, the terminal device may form channel information of the 1st second port group by using the channel information of the reference signal port 0, the channel information of the reference signal port 2, the channel information of the reference signal port 4, and the information of the reference signal port 6. The terminal device may form channel information of the 2nd second port group by using the channel information of the reference signal port 1, the channel information of the reference signal port 3, the channel information of the reference signal port 5, and the information of the reference signal port 7.

803b: The terminal device determines the channel information of the N first port groups based on a preset rule and the channel information of the P second port groups.

In a possible implementation, the preset rule includes: The N first port groups are in one-to-one correspondence with the P second port groups. That is, the N first port groups are the P second port groups. In this case, the terminal device uses the channel information of the P second port groups as the channel information of the N first port groups.

In another possible implementation, the preset rule includes: Each of the N first port groups corresponds to a plurality of second port groups in the P second port groups. The terminal device determines the channel information of the N first port groups based on the channel information of the P second port groups.

For example, as shown in FIG. 9, the plurality of reference signal ports include the reference signal port 0 to the reference signal port 7. The P second port groups include two second port groups. Port numbers of reference signal ports in the 1st second port group are {0, 2, 4, 6}, and port numbers of reference signal ports in the 2nd second port group are {1, 3, 5, 7}. In this case, the terminal device may form channel information of the 1st second port group by using the channel information of the reference signal port 0, the channel information of the reference signal port 2, the channel information of the reference signal port 4, and the channel information of the reference signal port 6. The terminal device may form channel information of the 2nd second port group by using the channel information of the reference signal port 1, the channel information of the reference signal port 3, the channel information of the reference signal port 5, and the channel information of the reference signal port 7. The N first port groups include four first port groups. Port numbers of reference signal ports in the 1st first port group are {0, 2}, port numbers of reference signal ports in the 2nd first port group are {1, 5}, port numbers of reference signal ports in the 3rd first port group are {2, 6}, and port numbers of reference signal ports in the 4th first port group are {3, 7}. In this case, the terminal device may determine channel information of the 1st first port group from the channel information of the 1st second port group, determine channel information of the 2nd first port group from the channel information of the 2nd second port group, determine channel information of the 3rd first port group from the channel information of the 1st second port group, and determine channel information of the 4th first port group from the channel information of the 2nd second port group.

Optionally, the first configuration information may further include a dimension of transmit antenna ports of the network device. The dimension of transmit antenna ports represents a quantity of transmit antenna ports of the network device in a horizontal direction and a quantity of transmit antenna ports of the network device in a vertical direction. Therefore, the terminal device can quantize a PMI by using an appropriate basis, to improve accuracy of a PMI reported by the terminal device.

As shown in FIG. 9, a dimension of transmit antenna ports is 2×4, indicating that the network device has two transmit antenna ports in the horizontal direction and four transmit antenna ports in the vertical direction. It should be understood that the transmit antenna port of the network device may also be one-dimensional. That is, a quantity of transmit antenna ports in the horizontal direction is 1, or a quantity of transmit antenna ports in the vertical direction is 1.

It should be noted that step 801a and steps 801 and 802 are not subject to a fixed performing sequence. For example, step 801a may be performed, before steps 801 and 802; or steps 801 and 802 are performed before step 801a; or step 801a and steps 801 and 802 are simultaneously performed depending on a situation. This is not specifically limited in this application.

In another possible implementation, step 802 and step 803 may be replaced with the following: The terminal device determines the N first port groups based on the plurality of reference signal ports. Specifically, the terminal device groups the plurality of reference signal ports into the N first port groups. For the N first port groups, refer to the foregoing related descriptions.

Based on step 801a, optionally, that the terminal device determines the N first port groups based on the plurality of reference signal ports specifically includes: The terminal device determines P second port groups based on the first configuration information, and then the terminal device determines the N first port groups based on a preset rule and the P second port groups.

In a possible implementation, the preset rule includes: The N first port groups are in one-to-one correspondence with the P second port groups. That is, the N first port groups are the P second port groups. That is, the terminal device uses the P second port groups as the N first port groups.

In another possible implementation, the preset rule includes: Each of the N first port groups corresponds to a plurality of second port groups in the P second port groups. The terminal device determines the N first port groups based on the P second port groups. A specific determining process is similar to the process of step 803b. For details, refer to the foregoing related descriptions.

804: The terminal device determines channel state information of N equivalent ports under a first weight based on the first weight and the channel information of the N first port groups.

The N equivalent ports are in one-to-one correspondence with the N first port groups. The channel information of the N first port groups is determined based on the reference signal. Optionally, for a process of determining the channel information of the N first port groups, refer to related descriptions in step 802 and step 803.

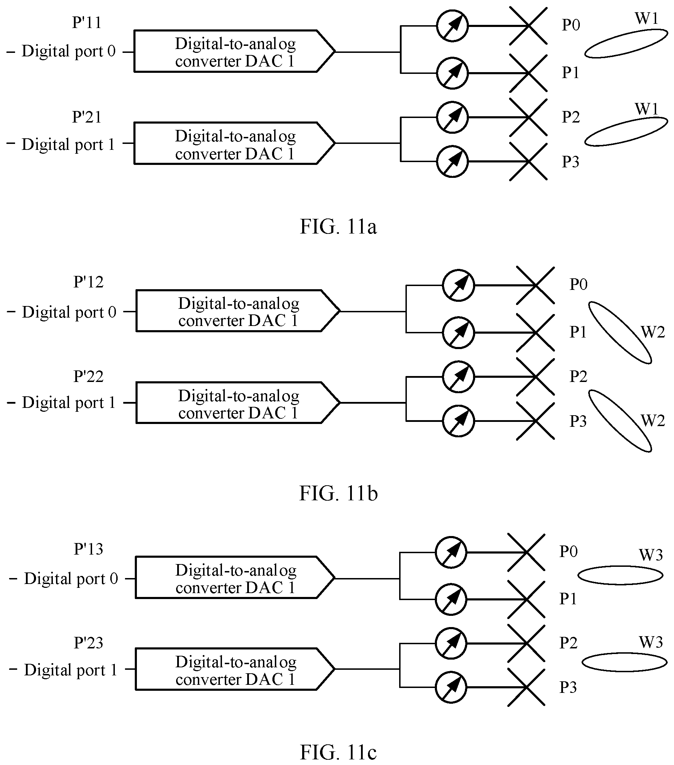

For example, as shown in FIG. 11a, the first weight is W1, the N first port groups include two first port groups, port numbers of reference signal ports in the 1st first port group are {0, 1}, and port numbers of reference signal ports in the 2nd first port group are {2, 3}. Channel information of the 1st first port group is represented as P1, and channel information of the 2nd first port group is represented as P2. Because each first port group includes two reference signal ports, it can be learned that the first weight W1 is a 2-dimensional column vector. The N first equivalent ports include two equivalent ports: an equivalent port 1 and an equivalent port 2. The terminal device weights the channel information of the 1st port group based on the first weight W1, to obtain channel information of the equivalent port 1 under the first weight W1, and weights the channel information of the 2nd first port group based on the first weight W1, to obtain channel information of the equivalent port 2 under the first weight W1. Details are shown in Formula 1 and Formula 2 below:

$$P''1_{W1}=[W1]^T * P1 \qquad \text{Formula 1}$$

$$P''2_{W1}=[W1]^T * P2 \qquad \text{Formula 2}$$

$P''1_{W1}$ is the channel information of the equivalent port 1 under the first weight W1. $P''2_{W1}$ is the channel information of the equivalent port 2 under the first weight W1.

Then, the terminal device determines channel state information of the equivalent port 1 under the first weight W1 based on the channel information of the equivalent port 1 under the first weight W1. The terminal device determines channel state information of the equivalent port 2 under the first weight W1 based on the channel information of the equivalent port 2 under the first weight W1.

It can be learned that the channel state information of the equivalent port 1 under the first weight W1 may be equivalent to channel state information of a digital port 1 obtained by the terminal device by measuring a reference signal 1. The channel state information of the equivalent port 2 under the first weight W1 may be equivalent to channel state information of a digital port 2 obtained by the terminal device by measuring the reference signal 1. The reference signal 1 is a reference signal sent by the network device by using a beam corresponding to the first weight W1.

It should be noted that a dimension of the first weight is the same as a quantity of reference signal ports included in each first port group. For example, as shown in FIG. 11a, each first port group includes two reference signal ports. Therefore, the first weight may be a 2-dimensional column vector. It should be noted that the first weight may also be a matrix. This is not specifically limited in this application.

Optionally, the embodiment shown in FIG. 8 further includes step 804a, and step 804a may be performed before step 805.

804a: The terminal device determines channel state information of the N equivalent ports under all of R second weights based on the R second weights and the channel information of the N first port groups.

R is an integer greater than or equal to 1.

In a possible implementation, one of the N equivalent ports corresponds to one digital port, and different equivalent ports correspond to different digital ports. For example, a reference signal port 0 and a reference signal port 1 are weighted, to obtain an equivalent port 0, and the equivalent port 1 corresponds to a digital port 0. A reference signal port 2 and a reference signal port 3 are weighted, to obtain an equivalent port 1, and the equivalent port 1 corresponds to a digital port 1. A reference signal port 4 and a reference signal port 5 are weighted, to obtain an equivalent port 2, and the equivalent port 2 corresponds to a digital port 2.

In another possible implementation, one of the N equivalent ports corresponds to a plurality of digital ports, and different equivalent ports correspond to different digital ports. For example, a reference signal port 0 and a reference signal port 1 are weighted, to obtain an equivalent port 0, and the equivalent port 1 corresponds to a digital port 0 and a digital port 1. A reference signal port 2 and a reference signal port 3 are weighted, to obtain an equivalent port 1, and the equivalent port 1 corresponds to a digital port 2 and a digital port 3. A reference signal port 4 and a reference signal port 5 are weighted, to obtain an equivalent port 2, and the equivalent port 2 corresponds to a digital port 4 and a digital port 5.

For example, the first weight is W1, and the R second weights include a second weight W2 and a second weight W3. As shown in FIG. 11a to FIG. 11c, the N first port groups include two first port groups, port numbers of reference signal ports in the 1st first port group are {0, 1}, and port numbers of reference signal ports in the 2nd first port group are {2, 3}. The N first equivalent ports include two equivalent ports: an equivalent port 1 and an equivalent port 2. Channel information of the 1st first port group is represented as P1, and channel information of the 2nd first port group is represented as P2. Because each first port group includes two reference signal ports, the first weight and the R second weights are all 2-dimensional column vectors. Therefore, the terminal device separately weights the channel information of the 1st first port group based on the first weight W1 and the R second weights W2, to obtain channel information of the equivalent port 1 under the first weight W1 and all of the R second weights W2. The terminal device separately weights the channel information of the 2nd first port group based on the first weight W1 and the R second weights, to obtain channel information of the equivalent port 2 under the first weight W1 and all of the R second weights W2. Details are shown in Formula 3 and Formula 4 below:

$$[\text{P"1}_{W1} \quad \text{P"1}_{W2} \quad \text{P"1}_{W3}] = [\text{W1} \quad \text{W2} \quad \text{W2}]^T * \text{P1} \qquad \text{Formula 3}$$

$$[\text{P"2}_{W1} \quad \text{P"2}_{W2} \quad \text{P"2}_{W3}] = [\text{W1} \quad \text{W2} \quad \text{W2}]^T * \text{P2} \qquad \text{Formula 4}$$

$\text{P"1}_{W1}$ is channel information of the equivalent port 1 under the first weight W1. $\text{P"2}_{W1}$ is channel information of the equivalent port 2 under the first weight W1. $\text{P"1}_{W2}$ is channel information of the equivalent port 2 under the first weight W1. $\text{P"2}_{W2}$ is channel information of the equivalent port 2 under the second weight W2. $\text{P"1}_{W3}$ is channel information of the equivalent port 2 under the second weight W3. $\text{P"2}_{W3}$ is channel information of the equivalent port 2 under the second weight W3.

Then, the terminal device determines channel state information of the equivalent port 1 under the first weight W1 and all of the R second weights W2 based on the channel information of the equivalent port 1 under the first weight W1 and all of the R second weights W2. The terminal device determines channel state information of the equivalent port 2 under the first weight W1 and all of the R second weights W2 based on the channel information of the equivalent port 2 under the first weight W1 and all of the R second weights W2.

It can be learned that, as shown in FIG. 11b, the channel state information of the equivalent port 1 under the second weight W2 may be equivalent to channel state information of the digital port 1 obtained by the terminal device by measuring a reference signal 2. The channel state information of the equivalent port 2 under the second weight W2 may be equivalent to channel state information of a digital port 2 obtained by the terminal device by measuring the reference signal 2. The reference signal 2 is a reference signal sent by the network device by using a beam corresponding to the second weight W2. As shown in FIG. 11c, the channel state information of the equivalent port 1 under the second weight W3 may be equivalent to channel state information of the digital port 1 obtained by the terminal device by measuring a reference signal 3. The channel state information of the equivalent port 2 under the second weight W3 may be equivalent to channel state information of the digital port 2 obtained by the terminal device by measuring the reference signal 3. The reference signal 3 is a reference signal sent by the network device by using a beam corresponding to the second weight W3.

It can be learned that the terminal device obtains the channel information of the N first port groups. The channel information of the N first port groups is more complete channel information. The terminal device can obtain, by using each weight, channel state information of a beam corresponding to each weight. This helps the terminal device quickly obtain channel state information of each beam, and feed back corresponding channel state information to the network device. Therefore, efficiency of obtaining channel state information by the network device is improved.

Further, the network device only needs to send the reference signal by using a resource of the reference signal, and does not need to configure a plurality of reference signal resources for channel measurement. This reduces resource overheads and a power consumption loss caused by sending the reference signal by the network device. The terminal device can obtain complete channel information by measuring the reference signal, and does not need to measure a plurality of reference signals, to reduce a power consumption loss caused by measuring the reference signal by the terminal device.

805: The terminal device sends first channel state information to the network device. Correspondingly, the network device receives the first channel state information from the terminal device.

The first channel state information includes the channel state information of the N equivalent ports under the first weight. Alternatively, the first channel state information is determined based on the channel state information of the N equivalent ports under the first weight.

The following describes the two possible implementations of the first channel state information. This application is also applicable to another implementation. This is not specifically limited in this application.

Implementation 1: The channel state information of the N equivalent ports under the first weight includes a first PMI, and the first PMI indicates a precoding matrix of the N equivalent ports under the first weight. The first channel state information includes an index of a first basis and a first coefficient. The first coefficient is determined based on the precoding matrix of the N equivalent ports under the first weight and the first basis. The first basis is a spatial domain basis, a frequency domain basis, or a spatial-frequency joint basis.

It should be noted that, in this application, each element in the precoding matrix of the N equivalent ports under the first weight corresponds to one equivalent port and one frequency domain unit, and the element represents a precoding weight of the equivalent port in the frequency domain unit. Different elements in the precoding matrix correspond to different equivalent ports and/or different frequency domain units.

Specifically, the first coefficient is obtained by projecting the precoding matrix of the N equivalent ports under the first weight onto the first basis.

For example, as shown in Formula 5, $W$ is the precoding matrix of the N equivalent ports under the first weight. $W_{s1}$ is a spatial domain basis, a quantity of columns of $W_{s1}$ is equal to a quantity of spatial domain basis vectors, and a quantity of rows of $W_{s1}$ is equal to N. The quantity of spatial domain basis vectors may be a quantity of spatial domain basis vectors configured by the network device for the terminal device. A column vector in $W_{s1}$ is a spatial domain basis vector, $W_2$ is the first coefficient, the $i^{th}$ column vector in $W_2$ corresponds to the $i^{th}$ row vector in $W_{s1}$, and whether all elements in the $i^{th}$ row vector in $W_2$ are 0 may be equivalent to whether the $i^{th}$ column vector in $W_{s1}$ is reported. The first basis includes column vectors in $W_{s1}$ corresponding to row vectors whose elements are not all 0 in $W_2$. i is greater than or equal to 1 and less than or equal to the quantity of spatial domain basis vectors.

$$W = W_{s1}W_2 \qquad\qquad \text{Formula 5}$$

For example, as shown in Formula 6 or Formula 7, $W$ is the precoding matrix of the N equivalent ports under the first weight. $W_{f1}$ is a frequency domain basis, a quantity of columns of $W_{f1}$ is equal to a quantity of frequency domain basis vectors, and a quantity of rows of $W_{f1}$ is equal to a quantity of frequency domain units. The quantity of frequency domain basis vectors may be a quantity of frequency domain basis vectors configured by the network device for the terminal device. A column vector in $W_{f1}$ is a frequency domain basis vector. A quantity of columns of $W_{s1}$ is equal to a quantity of spatial domain basis vectors, and a quantity of rows of $W_{s1}$ is equal to N. The quantity of spatial domain basis vectors may be a quantity of spatial domain basis vectors configured by the network device for the terminal device. A column vector in $W_{s1}$ is a spatial domain basis vector. $W_3$ is the first coefficient, a quantity of rows of $W_3$ is equal to the quantity of spatial domain basis vectors, and a quantity of columns is equal to the quantity of frequency domain basis vectors. An element in the $i^{th}$ row and the $j^{th}$ column in $W_3$ represents a coefficient corresponding to the $i^{th}$ spatial domain basis vector in $W_{s1}$ and the $j^{th}$ frequency domain basis vector in $W_{f1}$. The $i^{th}$ spatial domain basis vector in $W_{s1}$ is the $i^{th}$ column vector in $W_{s1}$, and the $j^{th}$ frequency domain basis vector in $W_{f1}$ is the $j^{th}$ column vector in $W_{f1}$. i is greater than or equal to 1 and less than or equal to the quantity of spatial domain basis vectors, and j is greater than or equal to 1 and less than or equal to the quantity of frequency domain basis vectors. Whether the element in the $i^{th}$ row and the $j^{th}$ column in $W_3$ is 0 may be equivalent to whether the coefficient corresponding to the $i^{th}$ spatial domain basis vector in $W_{s1}$ and the $j^{th}$ frequency domain basis vector in $W_{f1}$ is reported. The first basis is determined based on a spatial domain basis vector in $W_{s1}$ and a frequency domain basis vector in $W_{f1}$ corresponding to an element that is not 0 in $W_3$.

$$W = W_{s1} W_3 W_{f1}^{H} \qquad \text{Formula 6}$$

$$W = W_{s1} W_3 W_{f1}^{T} \qquad \text{Formula 7}$$

For example, as shown in Formula 8 or Formula 9, $W$ is the precoding matrix of the N equivalent ports under the first weight. A quantity of rows of $W_{s2}$ is equal to N, and quantities of columns of $W_{s2}$, $W_{f2}$ are equal to a quantity of spatial-frequency basis vectors. A quantity of rows of $W_{f2}$ is equal to a quantity of frequency domain units. The quantity of spatial-frequency domain basis vectors may be a quantity of spatial-frequency domain basis vectors configured by the network device for the terminal device. $W_4$ is a second coefficient, and in particular, $W_4$ is a diagonal matrix, and both a quantity of rows of $W_4$ and a quantity of columns of $W_4$ are equal to the quantity of spatial-frequency basis vectors. The $b^{th}$ diagonal element in $W_4$ represents a coefficient corresponding to the $b^{th}$ spatial-frequency basis vector, and the $p^{th}$ spatial-frequency basis vector is determined by the $b^{th}$ column vector in $W_{s2}$ and the $b^{th}$ column vector in $W_{f2}$, where b is greater than or equal to 1 and less than or equal to the quantity of spatial-frequency basis vectors. If the $b^{th}$ diagonal element in $W_4$ is not reported, the element is 0 by default. That is, whether the $b^{th}$ diagonal element in $W_4$ is 0 may be equivalent to whether a spatial-frequency basis vector corresponding to the $b^{th}$ diagonal element in $W_4$ is reported. The first basis is determined based on a spatial-frequency basis vector corresponding to a diagonal element that is not 0 in $W_4$.

$$W = W_{s2} W_4 W_{f2}^{H} \qquad \text{Formula 8}$$

$$W = W_{s2} W_4 W_{f2}^{T} \qquad \text{Formula 9}$$

Implementation 2: The first channel state information includes an index of a frequency domain basis, indexes of M equivalent ports of the N equivalent ports, and a second coefficient corresponding to a precoding weight of the M equivalent ports under the first weight. The second coefficient is determined based on the precoding weight of the M equivalent ports under the first weight and the frequency domain basis, and M is greater than or equal to 1 and less than N.

The second coefficient is obtained by projection of the precoding weight of the M equivalent ports under the first weight onto the frequency domain basis.

Implementation 2 is actually a special form of an example in Implementation 1. The following describes Implementation 2 by using an example of Formula 10 or Formula 11. As shown in Formula 10 or Formula 11 below, $W_1$ represents the precoding weight of the M equivalent ports under the first weight. $W_{s3}$ is an identity matrix, each column vector in $W_{s3}$ corresponds to one equivalent port, and different column vectors correspond to different equivalent ports. Whether all elements in the $a^{th}$ row in $W_5$ are 0 may be equivalent to whether an equivalent port corresponding to the $i^{th}$ column vector in $W_{s3}$ is reported, where a is an integer greater than or equal to 1 and less than or equal to N. For example, if all elements in the $a^{th}$ row in $W_5$ are 0, it indicates that an equivalent port corresponding to the $a^{th}$ column vector in $W_{s3}$ is not reported, so that M equivalent ports are selected from the N equivalent ports. $W_{f3}$ is a frequency domain basis, and a column vector in $W_{f3}$ is a frequency domain basis vector. A quantity of rows of $W_{f3}$ is equal to a quantity of frequency domain units, and a quantity of columns of $W_{f3}$ is equal to a quantity of frequency domain basis vectors. Whether all elements in the $j^{th}$ column in $W_5$ are 0 may be equivalent to whether the $j^{th}$ column vector in $W_{f3}$ is reported. j is greater than or equal to 1 and less than or equal to the quantity of frequency domain basis vectors. The foregoing frequency domain basis is formed by a frequency domain basis vector of $W_{f3}$ corresponding to a column vector whose elements are not all 0 in $W_{f3}$.

$$W_1 = W_{s3} W_5 W_{f3}^{H} \qquad \text{Formula 10}$$

$$W_1 = W_{s3} W_5 W_{f3}^{\mathrm{T}} \qquad\qquad \text{Formula 11}$$

For example, the terminal device may project the precoding matrix indicated by the first PMI onto a frequency domain basis 1. The frequency domain basis 1 may include all frequency domain basis vectors configured by the network device for the terminal device. Then, the terminal device selects the M equivalent ports that have maximum projection energy after projection of the precoding matrix indicated by the first PMI and X1 frequency domain basis vectors on the M equivalent ports. The terminal device reports the M equivalent ports selected by the terminal device, an index of a frequency domain basis 2, and the second coefficient for projection of the precoding weight of the M equivalent ports onto the frequency domain basis 2. The frequency domain basis 2 includes the X1 frequency domain basis vectors, and the second coefficient includes an amplitude and a phase.

In this implementation, the terminal device reports the channel state information of the N equivalent ports under the first weight in a port selection manner. That is, the terminal device selects to report the channel state information of the M equivalent ports under the first weight.

In Implementation 1 and Implementation 2, optionally, the first channel state information further includes at least one of the following: a first CQI and a first RI. The first CQI indicates channel quality corresponding to the N equivalent ports under the first weight. The first RI indicates a rank of a channel corresponding to the N equivalent ports under the first weight.

It should be noted that the foregoing example descriptions are merely used for ease of understanding, and do not limit a specific form of reporting a coefficient or a specific calculation manner of basis quantization. For example, the foregoing example may also be equivalent to a linear combination of a spatial domain basis, a frequency domain basis, or a spatial-frequency basis corresponding to a non-zero coefficient reported by the terminal device.

In another possible implementation, the first channel state information is determined based on the channel state information of the N equivalent ports under the first weight and channel state information of the N equivalent ports under all of X second weights of the R second weights. X is an integer greater than or equal to 1 and less than or equal to R.

X is a default value pre-agreed on by the network device and the terminal device, or is configured by the network device for the terminal device. This is not specifically limited in this application.

Optionally, the first channel state information includes a first PMI and X second PMIs, and the first PMI indicates a precoding matrix of the N equivalent ports under the first weight. The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI. The X second PMIs belong to the R second PMIs.

The terminal device may quantize the first PMI and the X second PMIs, and then report the quantized PMIs to the network device. Optionally, the channel state information of the N equivalent ports under the first weight includes a first PMI, and the first PMI indicates a precoding matrix of the N equivalent ports under the first weight. The channel state information of the N equivalent ports under all of the R second weights includes R second PMIs, the R second PMIs are in one-to-one correspondence with the R second weights, and one of the R second PMIs indicates a precoding matrix of the N equivalent ports under a second weight corresponding to the second PMI.

The first channel state information includes a third coefficient, X fourth coefficients, and an index of a second basis. The third coefficient is determined based on the precoding matrix of the N equivalent ports under the first weight and the second basis. The X fourth coefficients are in one-to-one correspondence with the X second PMIs in the R second PMIs. One of the X fourth coefficients is determined based on the second basis and a precoding matrix indicated by a second PMI corresponding to the fourth coefficient. The second basis is a spatial domain basis, a frequency domain basis, or a spatial-frequency joint basis.

Specifically, the third coefficient is obtained by projecting the precoding matrix of the N equivalent ports under the first weight onto the second basis. One of the X fourth coefficients is obtained by projecting a precoding matrix indicated by a second PMI corresponding to the fourth coefficient onto the second basis.

It should be noted that, in this implementation, a solution in which the terminal device uses the second basis as a shared basis and separately projects the first PMI and the X second PMIs onto the second basis to obtain corresponding coefficients is shown. In actual application, the terminal device may select more shared bases. Then, the terminal device separately projects the first PMI and the X second PMIs onto the more shared bases to obtain corresponding coefficients, and reports the coefficients. This is not specifically limited in this application.

In this implementation, further, optionally, the first channel state information further includes an eighth coefficient, an index of a third basis, X ninth coefficients, and indexes of bases corresponding to the X ninth coefficients. The eighth coefficient is determined based on the precoding matrix of the N equivalent ports under the first weight and the third basis, the X ninth coefficients are in one-to-one correspondence with the X second PMIs, and one of the X ninth coefficients is determined based on a precoding matrix indicated by a second PMI corresponding to the ninth coefficient and a basis corresponding to the ninth coefficient. The third basis is a spatial domain basis, a frequency domain basis, or a spatial-frequency joint basis, and the bases corresponding to the X ninth coefficients are spatial domain bases, frequency domain bases, or spatial-frequency joint bases.

Specifically, the eighth coefficient is obtained by projecting the precoding matrix of the N equivalent ports under the first weight onto the third basis. One of the X ninth coefficients is obtained by projecting a precoding matrix indicated by a second PMI corresponding to the ninth coefficient onto a basis corresponding to the ninth coefficient.

It should be noted that, in this implementation, an implementation in which the terminal device projects a precoding matrix indicated by each PMI onto one basis is shown. In actual application, the terminal device may select more bases for each PMI, project a precoding matrix indicated by the PMI onto the more bases, to obtain corresponding coefficients, and report the coefficients. This is not specifically limited in this application.

Optionally, in this implementation, the first channel state information further includes at least one of the following: a first CQI, a first RI, X second CQIs, or X second RIs.

For the first CQI and the first RI, refer to the foregoing related descriptions. The X second CQIs are in one-to-one correspondence with the X second weights, and one of the X second CQIs indicates channel quality corresponding to the N equivalent ports under a second weight corresponding to the second CQI. The X second RIs are in one-to-one correspondence with the X second weights, and one of the X second RIs indicates a rank of a channel corresponding to the N equivalent ports under a second weight corresponding to the second RI.

The following describes two possible implementations of obtaining the first weight by the terminal device.

The following describes step 801b to describe Implementation 1. Optionally, the embodiment shown in FIG. 8 further includes step 801b. Step 801b may be performed before step 804.

801b: The network device sends second configuration information to the terminal device. The second configuration information is used to configure the first weight. Correspondingly, the terminal device receives the second configuration information from the network device.

In Implementation 1, the network device may configure the first weight for the terminal device.

Optionally, the second configuration information is further used to configure the R second weights.

It should be noted that step 801b and steps 801a to 803 are not subject to a fixed performing sequence. Step 801b may be performed before steps 801a to 803; or steps 801a to 803 are performed before step 801b; or step 801b and steps 801a to 803 are simultaneously performed depending on a situation. This is not specifically limited in this application.

Optionally, configuration information in step 801a and step 801b may be same configuration information, or may be two different pieces of configuration information. This is not specifically limited in this application.

Implementation 2: The first weight is determined by the terminal device. Optionally, the first weight is a first codebook selected by the terminal device from a codebook set.

The codebook set is configured by the network device for the terminal device, or is specified in a communication protocol. This is not specifically limited in this application.

Optionally, the R second weights may also be R codebooks selected by the terminal device from the codebook set.

In a possible implementation, a codebook in the codebook set may be a DFT matrix.

In another possible implementation, the codebook in the codebook set may feed back a phase difference between a transmit port in a horizontal direction and a transmit port in a vertical direction based on quantization precision.

For example, the network device configures the following parameters for the terminal device: $N_1$, $N_2$, $O_1$, and $O_2$.

$N_1$ represents a dimension of a transmit antenna port in the horizontal direction, and $N_2$ represents a dimension of the transmit antenna port in the vertical direction. Correspondingly, $O_1$ represents an oversampling coefficient corresponding to the dimension of the transmit antenna port in the horizontal direction. $O_2$ represents an oversampling coefficient corresponding to the dimension of the transmit antenna port in the vertical direction. Alternatively,

$N_1$ represents the dimension of the transmit antenna port in the vertical direction, and $N_2$ represents the dimension of the transmit antenna port in the horizontal direction. Correspondingly, $O_1$ represents the oversampling coefficient corresponding to the dimension of the transmit antenna port in the vertical direction. $O_2$ represents the oversampling coefficient corresponding to the dimension of the transmit antenna port in the horizontal direction.

It should be noted that a dimension represented by each of $N_1$ and $N_2$ is determined by the network device. This is not specifically limited in this application.

Therefore, a form of the first codebook fed back by the terminal device may be, $v_{q,p}$ and is specifically represented as:

$$v_{q,p} = [u_p, e^{j\frac{2\pi q}{O_1 N_1}} u_p \ldots\ldots e^{j\frac{2\pi q(N_1-1)}{O_1 N_1}} u_p]^T \qquad \text{Formula 12}$$

Values of q and p are determined by the terminal device. For example, the terminal device may determine optimal (q, p) and then feed back optimal (q, p). It should be noted that the terminal device needs to feed back p only when a value of

$N_2$ is greater than 1.

$$u_p = \begin{cases} [1, e^{j\frac{2\pi p}{O_2 N_2}}, \ldots e^{j\frac{2\pi p(N_2-1)}{O_2 N_2}}] & N_2 > 1 \\ 1 & N_2 = 1 \end{cases}.$$

It should be noted that the terminal device uses a same codebook in different polarization directions. Different polarization directions may not be explicitly reflected in a communication protocol. For example, a first part of reference ports correspond to a first polarization direction, and a second part of reference signal ports correspond to a second polarization direction. The first part of reference signal ports are first half of reference signal ports with small port numbers in the plurality of reference signal ports. The second part of reference signal ports are second half of reference signal ports with larger port numbers in the plurality of reference signal ports. Each of the plurality of first port groups including the first part of reference signal ports and the second part of reference signal ports is weighted by using the first codebook.

Optionally, the embodiment shown in FIG. 8 further includes step 805a, and step 805a may be performed after step 804.

805a: The terminal device sends indication information to the network device. The indication information indicates the first codebook; or the indication information indicates a beam direction corresponding to the first weight, and the beam direction corresponding to the first weight is used by the network device to determine the first codebook. Correspondingly, the network device receives the indication information from the terminal device.

For example, the network device configures the following antenna array arrangements for the terminal device: an antenna spacing (for example, 0.5 wavelength) between transmit antenna ports in the horizontal direction, an antenna spacing between transmit antenna ports in the vertical direction, and a dimension of a transmit antenna port. Then, the terminal device may report a beam direction corresponding to the first weight in the antenna array arrangement.

It should be noted that, for the first codebook, the terminal device may alternatively perform quantization reporting in another form. This is not specifically limited in this application. For example, the terminal device may quantize and report a modulus and/or a phase of an element in the first codebook. This is not specifically limited in this application.

It should be noted that step 805 and step 805a are not subject to a fixed execution sequence. Step 805 may be performed before step 805a; or step 805a may be performed before step 805; or step 805 and step 805a are simultaneously performed depending on a situation. This is not specifically limited in this application.

In this embodiment of this application, the terminal device determines the channel information of the plurality of reference signal ports based on the reference signal. The channel information of the plurality of reference signal ports is more complete channel information. The terminal device may determine the channel information of the N first port groups based on the channel information of the plurality of reference signal ports, and then determine the channel state information of the N equivalent ports under the first weight with reference to the first weight and the channel information of the N first port groups. Therefore, the terminal device obtains channel state information of a beam corresponding to the first weight. For the terminal device, the terminal device may obtain more complete channel information based on the reference signal. This helps the terminal device quickly obtain channel state information of a beam corresponding to each weight, and feed back corresponding channel state information to the network device. Efficiency of obtaining channel state information by the network device is improved.

The following describes communication apparatuses provided in embodiments of this application.

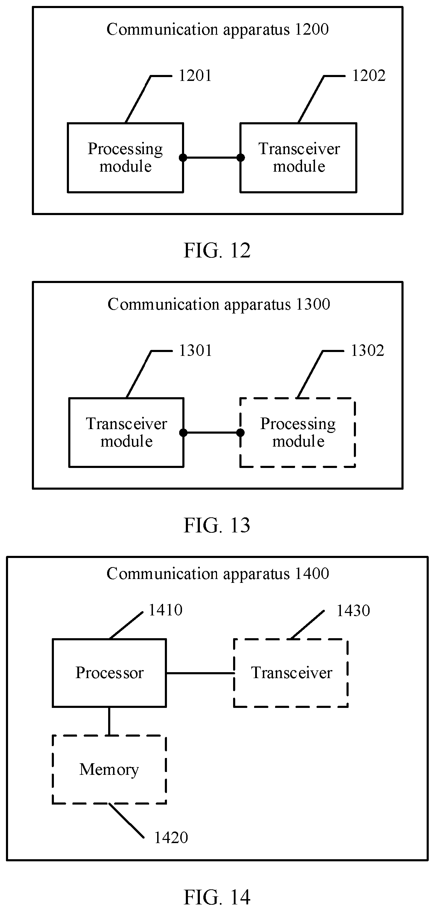

FIG. 12 is a diagram of a first structure of a communication apparatus according to an embodiment of this application. Refer to FIG. 12. The communication apparatus may be configured to perform the processes performed by the terminal device in the embodiment shown in FIG. 8. For details, refer to the related descriptions in the foregoing method embodiment.

The communication apparatus 1200 includes a processing module 1201 and a transceiver module 1202. The transceiver module 1202 may implement a corresponding communication function. The processing module 1201 is configured to process data. The transceiver module 1202 may also be referred to as a communication interface or a communication module.

Optionally, the communication apparatus 1200 may further include a storage module. The storage module may be configured to store instructions and/or data. The processing module 1201 may read the instructions and/or the data in the storage module, so that the communication apparatus implements the foregoing method embodiment.

The communication apparatus module 1200 may be configured to perform an action performed by the terminal device in the embodiment shown in FIG. 8. The communication apparatus 1200 may be a terminal device or a component that can be disposed in the terminal device. The processing module 1201 is configured to perform a processing-related operation on a terminal device side in the embodiment shown in FIG. 8. Optionally, the transceiver module 1202 is configured to perform a receiving-related operation on the terminal device side in the embodiment shown in FIG. 8.

Optionally, the transceiver module 1202 may include a sending module and a receiving module. The sending module is configured to perform the sending operation in the embodiment shown in FIG. 8. The receiving module is configured to perform the receiving operation in the embodiment shown in FIG. 8.

It should be noted that the communication apparatus 1200 may include a sending module, but does not include a receiving module. Alternatively, the communication apparatus 1200 may include a receiving module, but does not include a sending module. This may be specifically determined depending on whether the foregoing solution performed by the communication apparatus 1200 includes a sending action and a receiving action. The communication apparatus 1200 is configured to perform an action performed by the terminal device in the embodiment shown in FIG. 8.

In a possible implementation, the communication apparatus 1200 is configured to perform the following solution: The transceiver module 1202 is configured to receive a reference signal from a network device, where the reference signal corresponds to a plurality of reference signal ports.

The processing module 1201 is configured to: determine channel information of the plurality of reference signal ports based on the reference signal; determine channel information of N first port groups based on the channel information of the plurality of reference signal ports, where the plurality of reference signal ports include all reference signal ports in the N first port groups, different first port groups in the N first port groups include different reference signal ports, and N is an integer greater than or equal to 1; and determine channel state information of N equivalent ports under a first weight based on the first weight and the channel information of the N first port groups, where the N first port groups are in one-to-one correspondence with the N equivalent ports.

The transceiver module 1202 is further configured to send first channel state information to the network device, where the first channel state information is determined based on the channel state information of the N equivalent ports under the first weight, or the first channel state information includes the channel state information of the N equivalent ports under the first weight.

In another possible implementation, the communication apparatus 1200 is configured to perform the following solution:

The transceiver module 1202 is configured to receive a reference signal from a network device, where the reference signal corresponds to a plurality of reference signal ports.

The processing module 1201 is configured to: determine N first port groups based on the plurality of reference signal ports, where the plurality of reference signal ports include all reference signal ports in the N first port groups, different first port groups in the N first port groups include different reference signal ports, and N is an integer greater than or equal to 1; and determine channel state information of N equivalent ports under a first weight based on the first weight and channel information of the N first port groups, where the N first port groups are in one-to-one correspondence with the N equivalent ports.

The transceiver module 1202 is further configured to send first channel state information to the network device, where the first channel state information is determined based on the channel state information of the N equivalent ports under the first weight, or the first channel state information includes the channel state information of the N equivalent ports under the first weight.

It should be understood that a specific process in which the modules perform the foregoing corresponding processes has been described in detail in the foregoing method embodiment. For brevity, details are not described herein again.

The processing module 1201 in the foregoing embodiment may be implemented by at least one processor or a processor-related circuit. The transceiver module 1202 may be implemented by a transceiver or a transceiver-related circuit. The transceiver module 1202 may also be referred to as a communication module or a communication interface. The storage module may be implemented by using at least one memory.

FIG. 13 is a diagram of a second structure of a communication apparatus according to an embodiment of this application. Refer to FIG. 13. The communication apparatus may be configured to perform the processes performed by the network device in the embodiment shown in FIG. 8. For details, refer to the related descriptions in the foregoing method embodiment.

The communication apparatus 1300 includes a transceiver module 1301. Optionally, the communication apparatus 1300 further includes a processing module 1302. The transceiver module 1301 may implement a corresponding communication function. The processing module 1302 is configured to process data. The transceiver module 1301 may also be referred to as a communication interface or a communication module.

Optionally, the communication apparatus 1300 may further include a storage module. The storage module may be configured to store instructions and/or data. The processing module 1302 may read the instructions and/or the data in the storage module, so that the communication apparatus implements the foregoing method embodiment.

The communication apparatus 1300 may be configured to perform an action performed by the network device in the embodiment shown in FIG. 8. The communication apparatus 1300 may be a network device or a component that can be disposed in the network device. The processing module 1302 is configured to perform a processing-related operation on a network device side in the embodiment shown in FIG. 8. Optionally, the transceiver module 1301 is configured to perform a receiving-related operation on the network device side in the embodiment shown in FIG. 8.

Optionally, the transceiver module 1301 may include a sending module and a receiving module. The sending module is configured to perform the sending operation in the embodiment shown in FIG. 8. The receiving module is configured to perform the receiving operation in the embodiment shown in FIG. 8.

It should be noted that the communication apparatus 1300 may include a sending module, but does not include a receiving module. Alternatively, the communication apparatus 1300 may include a receiving module, but does not include a sending module. This may be specifically determined depending on whether the foregoing solution performed by the communication apparatus 1300 includes a sending action and a receiving action. The communication apparatus 1300 is configured to perform an action performed by the network device in the embodiment shown in FIG. 8.

In a possible implementation, the communication apparatus 1300 is configured to perform the following solution: The transceiver module 1301 is configured to: send a reference signal to a terminal device, where the reference signal corresponds to a plurality of reference signal ports; and receive first channel state information from the terminal device, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N equivalent ports are in one-to-one correspondence with the N equivalent ports, the channel information of the N first port groups is determined based on channel information of the plurality of reference signal ports, the channel information of the plurality of reference signal ports is determined based on the reference signal, and N is an integer greater than or equal to 1.

In another possible implementation, the communication apparatus 1300 is configured to perform the following solution:

The transceiver module 1301 is configured to: send a reference signal to a terminal device, where the reference signal corresponds to a plurality of reference signal ports; and receive first channel state information from the terminal device, where the first channel state information is determined based on channel state information of N equivalent ports under a first weight, or the first channel state information includes the channel state information of the N equivalent ports under the first weight, the channel state information of the N equivalent ports under the first weight is determined based on the first weight and channel information of N first port groups, the N first port groups are in one-to-one correspondence with the N equivalent ports, the plurality of reference signal ports include all reference signal ports in the N first port groups, different first port groups in the N first port groups include different reference signal ports, and N is an integer greater than or equal to 1.

It should be understood that a specific process in which the modules perform the foregoing corresponding processes has been described in detail in the foregoing method embodiment. For brevity, details are not described herein again.

The processing module 1302 in the foregoing embodiment may be implemented by at least one processor or a processor-related circuit. The transceiver module 1301 may be implemented by a transceiver or a transceiver-related circuit. The transceiver module 1301 may also be referred to as a communication module or a communication interface. The storage module may be implemented by using at least one memory.

FIG. 14 is a diagram of a third structure of a communication apparatus according to an embodiment of this application. Refer to FIG. 14. The communication apparatus 1400 includes a processor 1410. The processor 1410 is coupled to a memory 1420. The memory 1420 is configured to store a computer program or instructions and/or data. The processor 1410 is configured to execute the computer program or the instructions and/or the data stored in the memory 1420, so that the method in the foregoing method embodiment is performed.

Optionally, the communication apparatus 1400 includes one or more processors 1410.

Optionally, as shown in FIG. 14, the communication apparatus 1400 may further include the memory 1420.

Optionally, the communication apparatus 1400 may include one or more memories 1420.

Optionally, the memory 1420 and the processor 1410 may be integrated together, or separately disposed.

Optionally, as shown in FIG. 14, the communication apparatus 1400 may further include a transceiver 1430. The transceiver 1430 is configured to receive and/or send a signal. For example, the processor 1410 is configured to control the transceiver 1430 to receive a signal and/or send a signal.

In a solution, the communication apparatus 1400 is configured to implement operations performed by the terminal device in the foregoing method embodiment.

For example, the processor 1410 is configured to implement processing-related operations performed by the terminal device in the foregoing method embodiment, and the transceiver 1430 is configured to implement sending-related and receiving-related operations performed by the terminal device in the foregoing method embodiment.

In a solution, the communication apparatus 1400 is configured to implement the operations performed by the network device in the foregoing embodiments.

For example, the processor 1410 is configured to implement processing-related operations performed by the network device in the foregoing method embodiment, and the transceiver 1430 is configured to implement sending-related and receiving-related operations performed by the network device in the foregoing method embodiment.

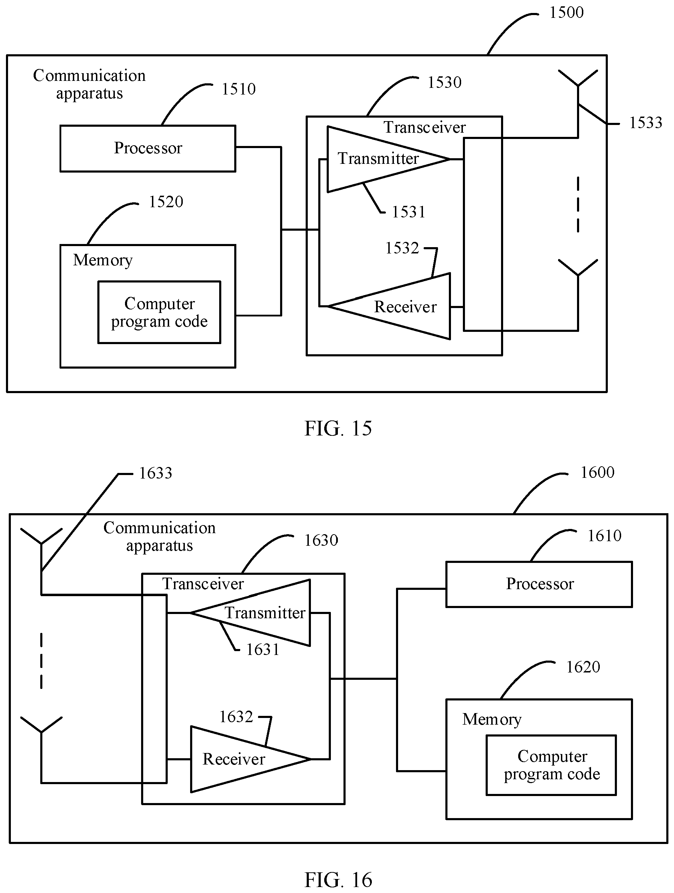

FIG. 15 is a diagram of a fourth structure of a communication apparatus according to an embodiment of this application. Refer to FIG. 15. The communication apparatus 1500 may be a terminal device, a processor of the terminal device, or a chip. The communication apparatus 1500 may be configured to perform an operation performed by the terminal device in the foregoing method embodiment.

When the communication apparatus 1500 is a terminal device, FIG. 15 is a simplified schematic of a structure of the terminal device. As shown in FIG. 15, the terminal device includes a processor, a memory, and a transceiver. The memory may store computer program code. The transceiver includes a transmitter machine 1531, a receiver machine 1532, a radio frequency circuit (not shown in the figure), an antenna 1533, and an input/output apparatus (not shown in the figure).

The processor is mainly configured to: process a communication protocol and communications data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 15 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 15, the terminal device includes a processor 1510, a memory 1520, and a transceiver 1530. The processor 1510 may also be referred to as a processing unit, a processing board, a processing module, a processing apparatus, or the like. The transceiver 1530 may also be referred to as a transceiver unit, a transceiver machine, a transceiver apparatus, or the like.

Optionally, a component that is in the transceiver 1530 and that is configured to implement a receiving function may be considered as a receiving module, and a component that is in the transceiver 1530 and that is configured to implement a sending function may be considered as a sending module. That is, the transceiver 1530 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, the processor 1510 is configured to perform a processing action on a terminal device side in the embodiment shown in FIG. 8, and the transceiver 1530 is configured to perform transmit and receive actions on the terminal device side in FIG. 8.

It should be understood that FIG. 15 is merely an example rather than a limitation, and the terminal device including the transceiver module and the processing module may not rely on the structure shown in FIG. 12.

When the communication apparatus 1500 is a chip, the chip includes a processor and a transceiver. The transceiver may be an input/output circuit or a communication interface. The processor may be a processing module, a microprocessor, or an integrated circuit integrated on the chip. A sending operation performed by the terminal device in the foregoing method embodiment may be understood as an output of the chip, and a receiving operation performed by the terminal device in the foregoing method embodiment may be understood as an input of the chip.

FIG. 16 is a diagram of a fifth structure of a communication apparatus according to an embodiment of this application. Refer to FIG. 16. The communication apparatus 1600 may be a network device or a chip. The communication apparatus 1600 may be configured to perform an operation performed by the network device in the foregoing method embodiment.

When the communication apparatus 1600 is the network device, for example, a base station, FIG. 16 is a diagram of a simplified structure of the base station. The base station includes a part 1610, a part 1620, and a part 1630. The part 1610 is mainly configured to perform baseband processing, control the base station, and the like. The part 1610 is usually a control center of the base station, may be usually referred to as a processor, and is configured to control the base station to perform a processing operation on a network device side in the foregoing method embodiment. The part 1620 is mainly configured to store computer program code and data. The part 1630 is mainly configured to receive/send a radio frequency signal, and perform conversion between the radio frequency signal and a baseband signal. The part 1630 may be usually referred to as a transceiver module, a transceiver, a transceiver circuit, a transceiver machine, or the like. A transceiver module in the part 1630 may also be referred to as a transceiver machine, a transceiver, or the like, and includes an antenna 1633 and a radio frequency circuit (not shown in the figure). The radio frequency circuit is mainly configured to perform radio frequency processing. Optionally, a component configured to implement a receiving function in the part 1630 may be considered as a receiver, and a component configured to implement a sending function may be considered as a transmitter. In other words, the part 1630 includes a receiver 1632 and a transmitter 1631. The receiver may also be referred to as a receiving module, a receiver machine, a receiver circuit, or the like, and the transmitter may be referred to as a transmitting module, a transmitter machine, a transmitter circuit, or the like.

The part 1610 and the part 1620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

In an implementation, the transceiver module in the part 1630 is configured to perform receiving and sending-related processes performed by the network device in the embodiment shown in FIG. 8. The processor in the part 1610 is configured to perform a processing-related process performed by the network device in the embodiment shown in FIG. 8.

It should be understood that FIG. 16 is merely an example rather than a limitation. The network device including the processor, the memory, and the transceiver may not rely on the structure shown in FIG. 13.

When the communication apparatus 1600 is a chip, the chip includes a transceiver and a processor. The transceiver may be an input/output circuit or a communication interface. The processor is a processor, a microprocessor, or an integrated circuit integrated on the chip. A sending operation performed by the network device in the foregoing method embodiment may be understood as an output of the chip, and a receiving operation performed by the network device in the foregoing method embodiment may be understood as an input of the chip.

An embodiment of this application further provides a computer-readable storage medium. The computer-readable storage medium stores computer instructions used to implement the method performed by the terminal device or the network device in the foregoing method embodiment.

For example, when a computer program is executed by a computer, the computer is enabled to implement the method performed by the terminal device or the network device in the foregoing method embodiment.

An embodiment of this application further provides a computer program product including instructions. When the instructions are executed by a computer, the computer is enabled to implement the method performed by the terminal device or the network device in the foregoing method embodiment.

An embodiment of this application further provides a communication system. The communication system includes the terminal device and the network device in the foregoing embodiments. The terminal device is configured to perform all or a part of the steps in the embodiment shown in FIG. 8. The network device is configured to perform all or a part of the steps in the embodiment shown in FIG. 8.

An embodiment of this application further provides a chip apparatus including a processor, configured to invoke a computer program or computer instructions stored in a memory, so that the processor performs the method in the embodiment shown in FIG. 8.

In a possible implementation, an input of the chip apparatus corresponds to a receiving operation in the embodiment shown in FIG. 8, and an output of the chip apparatus corresponds to a sending operation in the embodiment shown in FIG. 8.

Optionally, the processor is coupled to the memory through an interface.

Optionally, the chip apparatus further includes the memory, and the memory stores the computer program or the computer instructions.

Any processor mentioned above may be a general-purpose central processing unit, a microprocessor, an application-specific integrated circuit (application-specific integrated circuit, ASIC), or one or more integrated circuits configured to control program execution of the method in the embodiment shown in FIG. 8. The memory mentioned anywhere above may be a read-only memory (read-only memory, ROM), another type of static storage device that can store static information and instructions, a random access memory (random access memory, RAM), or the like.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, a part that essentially contributes to the technical solutions of this application or all or a part of the technical solutions may be implemented in a form of a software product. The computer software product is stored in a storage medium, and includes several instructions for enabling a computer device (which may be a personal computer, a server, a network device, or the like) to perform all or a part of steps of the methods in embodiments of this application. The foregoing storage medium includes any medium that can store program code, such as a USB flash drive, a removable hard disk drive, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1.    A channel state information sending method, wherein the method comprises:

receiving, by a terminal device, a reference signal from a network device, wherein the reference signal corresponds to a plurality of reference signal ports;

determining, by the terminal device, N first port groups based on the plurality of reference signal ports, wherein the plurality of reference signal ports comprise all reference signal ports in the N first port groups, different first port groups in the N first port groups comprise different reference signal ports, and N is an integer greater than or equal to 1;

determining, by the terminal device, channel state information of N equivalent ports under a first weight based on the first weight and channel information of the N first port groups, wherein the N first port groups are in one-to-one correspondence with the N equivalent ports; and

sending, by the terminal device, first channel state information to the network device, wherein the first channel state information is determined based on the channel state information of the N equivalent ports under the first weight.

2.    A channel state information receiving method, wherein the method comprises:

sending, by a network device, a reference signal to a terminal device, wherein the reference signal corresponds to a plurality of reference signal ports; and

receiving, by the network device, first channel state information from the terminal device, wherein

the first channel state information is determined based on channel state information of N equivalent ports under a first weight, the channel state information of the N equivalent ports under the first weight is determined based on the first weight and channel information of N first port groups, the N first port groups are in one-to-one correspondence with the N equivalent ports, the plurality of reference signal ports comprise all reference signal ports in the N first port groups, different first port groups in the N first port groups comprise different reference signal ports, and N is an integer greater than or equal to 1.

3.    The method according to claim 1 or 2, wherein the channel state information of the N equivalent ports under the first weight comprises a first precoding matrix indicator PMI, and the first PMI indicates a precoding matrix of the N equivalent ports under the first weight; and
the first channel state information comprises an index of a first basis and a first coefficient, the first coefficient is determined based on the precoding matrix of the N equivalent ports under the first weight and the first basis, and the first basis is a spatial domain basis, a frequency domain basis, or a spatial-frequency joint basis.

4. The method according to claim 1 or 2, wherein the first channel state information comprises an index of a frequency domain basis and a second coefficient corresponding to a precoding weight of M equivalent ports of the N equivalent ports under the first weight, the second coefficient is determined based on the precoding weight of the M equivalent ports under the first weight and the frequency domain basis, and M is greater than or equal to 1 and less than N.

5. The method according to any one of claims 1 to 4, wherein the first channel state information further comprises at least one of the following: a first channel quality indicator CQI and a first rank indicator RI; and
the first CQI indicates channel quality corresponding to the N equivalent ports under the first weight, and the first RI indicates a rank of a channel corresponding to the N equivalent ports under the first weight.

6. The method according to claim 1, wherein the method further comprises:

   determining, by the terminal device, channel state information of the N equivalent ports under all of R second weights based on the R second weights and the channel information of the N first port groups, wherein R is an integer greater than or equal to 1, wherein
   the first channel state information is determined based on the channel state information of the N equivalent ports under the first weight and channel state information of the N equivalent ports under all of X second weights of the R second weights, and X is an integer greater than or equal to 1 and less than or equal to R.

7. The method according to claim 6, wherein the channel state information of the N equivalent ports under the first weight comprises a first precoding matrix indicator PMI, and the first PMI indicates a precoding matrix of the N equivalent ports under the first weight;

   the channel state information of the N equivalent ports under all of the R second weights comprises R second PMIs, the R second PMIs are in one-to-one correspondence with the R second weights, and one of the R second PMIs indicates a precoding matrix of the N equivalent ports under a second weight corresponding to the second PMI; and
   the first channel state information comprises a third coefficient, X fourth coefficients, and an index of a second basis, the third coefficient is determined based on the precoding matrix of the N equivalent ports under the first weight and the second basis, the X fourth coefficients are in one-to-one correspondence with X second PMIs in the R second PMIs, one of the X fourth coefficients is determined based on a precoding matrix indicated by a second PMI corresponding to the fourth coefficient and a projection onto the second basis, and the second basis is a spatial domain basis, a frequency domain basis, or a spatial-frequency joint basis.

8. The method according to any one of claims 1 to 7, wherein before the determining, by the terminal device, the channel information of the N first port groups based on channel information of the plurality of reference signal ports, the method further comprises:

   receiving, by the terminal device, first configuration information from the network device; or
   sending, by the network device, first configuration information to the terminal device, wherein
   the first configuration information indicates P second port groups, and the N first port groups are determined based on the P second port groups.

9. The method according to claim 8, wherein the determining, by the terminal device, N first port groups comprises:

   determining, by the terminal device, the P second port groups based on the first configuration information; and
   determining, by the terminal device, the N first port groups based on the preset rule and the P second port groups.

10. The method according to claim 8 or 9, wherein the first configuration information comprises a quantity of the plurality of reference signal ports and a code division multiplexing type used by the plurality of reference signal ports, and a value of P is any one of the following:

    a ratio of the quantity of the plurality of reference signal ports to a quantity of reference signal ports using time-

domain code division indicated by the code division multiplexing type;

the quantity of reference signal ports using time-domain code division indicated by the code division multiplexing type;

a ratio of the quantity of the plurality of reference signal ports to a quantity of code division multiplexing groups, wherein the quantity of code division multiplexing groups is equal to a ratio of the quantity of the plurality of reference signal ports to a quantity of reference signal ports comprised in each code division multiplexing group indicated by the code division multiplexing type;

a product of the quantity of code division multiplexing groups and the quantity of reference signal ports using time-domain code division indicated by the code division multiplexing type; or

the quantity of code division multiplexing groups.

11. The method according to claim 10, wherein reference signal ports in the P second port groups are obtained by evenly grouping the plurality of reference signal ports in ascending order of port numbers of the reference signal ports based on a quantity of the P second port groups.

12. The method according to any one of claims 1 to 11, wherein the method further comprises:

receiving, by the terminal device, second configuration information from the network device; or

sending, by the network device, second configuration information to the terminal device, wherein the second configuration information is used to configure the first weight.

13. The method according to any one of claims 1 to 12, wherein the first weight is determined by the terminal device, and the first weight is a first codebook selected by the terminal device from a codebook set.

14. The method according to claim 13, wherein the method further comprises:

sending, by the terminal device, indication information to the network device; or

receiving, by the network device, indication information from the terminal device, wherein

the indication information indicates the first codebook; or the indication information indicates a beam direction corresponding to the first weight, and the beam direction corresponding to the first weight is used by the network device to determine the first codebook.

15. The method according to any one of claims 1 to 14, wherein in the plurality of reference signal ports, a first part of reference ports correspond to a first polarization direction, and a second part of reference signal ports correspond to a second polarization direction; and

the first part of reference signal ports are first half of reference signal ports with smaller port numbers in the plurality of reference signal ports, and the second part of reference signal ports are second half of reference signal ports with larger port numbers in the plurality of reference signal ports.

16. The method according to any one of claims 1 to 15, wherein one of the N equivalent ports corresponds to one digital port, and different equivalent ports correspond to different digital ports.

17. The method according to any one of claims 1 to 16, wherein each of the plurality of reference signal ports corresponds to one analog port, and different reference signal ports correspond to different analog ports.

18. A communication apparatus, wherein the communication apparatus comprises a transceiver module and a processing module, wherein

the transceiver module is configured to perform receiving and sending operations according to any one of claims 1, and 3 to 17, and the processing module is configured to perform a processing operation according to claims 1, and 3 to 17;

or

the transceiver module is configured to perform receiving and sending operations according to any one of claims 2 to 17, and the processing module is configured to perform a processing operation according to any one of claims 2 to 17.

19. A communication apparatus, wherein the communication apparatus comprises a processor, and the processor is configured to execute a computer program or computer instructions in a memory, to perform the method according to any one of claims 1, and 3 to 17, or perform the method according to any one of claims 2 to 17.

20. A computer-readable storage medium, wherein the computer-readable storage medium stores a computer program; and when the computer program is executed by a communication apparatus, the communication apparatus is enabled to perform the method according to any one of claims 1, and 3 to 17, or the communication apparatus is enabled to perform the method according to any one of claims 2 to 17.

FIG. 1

FIG. 2

Antenna array

— Digital port 0 — | Digital-to-analog converter DAC 1 | ✕ First antenna element or first group of antenna elements

— Digital port 1 — | Digital-to-analog converter DAC 2 | ✕ Second antenna element or second group of antenna elements

— Digital port 2 — | Digital-to-analog converter DAC 3 | ✕ Third antenna element or third group of antenna elements

— Digital port 3 — | Digital-to-analog converter DAC 4 | ✕ Fourth antenna element or fourth group of antenna elements

— Digital port 4 — | Digital-to-analog converter DAC 5 | ✕ Fifth antenna element or fifth group of antenna elements

— Digital port 5 — | Digital-to-analog converter DAC 6 | ✕ Sixth antenna element or sixth group of antenna elements

FIG. 3

EP 4 589 858 A1

Antenna array

— Digital port — | Digital-to-analog converter DAC 1 |

Phase shifter 1

Phase shifter 2

Phase shifter 3

Phase shifter 4

Phase shifter 5

Phase shifter 6

First antenna element or first group of antenna elements

Second antenna element or second group of antenna elements

Third antenna element or third group of antenna elements

Fourth antenna element or fourth group of antenna elements

Fifth antenna element or fifth group of antenna elements

Sixth antenna element or sixth group of antenna elements

FIG. 4

Antenna array

— Digital port 0 —| Digital-to-analog converter DAC 1 |

Phase shifter 1

0 — First antenna element or first group of antenna elements

1 — Second antenna element or second group of antenna elements

Phase shifter 2

— Digital port 1 —| Digital-to-analog converter DAC 1 |

Phase shifter 3

2 — Third antenna element or third group of antenna elements

3 — Fourth antenna element or fourth group of antenna elements

Phase shifter 4

— Digital port 2 —| Digital-to-analog converter DAC 1 |

Phase shifter 5

4 — Fifth antenna element or fifth group of antenna elements

5 — Sixth antenna element or sixth group of antenna elements

Phase shifter 6

FIG. 5

FIG. 6

EP 4 589 858 A1

Antenna array

Beam 1

FIG. 7a

Antenna array

Beam 2

FIG. 7b

Antenna array

Beam 3

FIG. 7c

```
┌─────────────────┐                              ┌─────────────────┐
│ Terminal device │                              │ Network device  │
└─────────────────┘                              └─────────────────┘
        │                                                 │
        │  801b: Second configuration information (used to│
        │              configure a first weight)          │
        │ ◄ ─ ─ ─ ─ ─ ─ ─ ─ ─ ─ ─ ─ ─ ─ ─ ─ ─ ─ ─ ─ ─ ─ ┤
        │                                                 │
        │       801a: First configuration information     │
        │     (used to configure P second port groups)    │
        │ ◄ ─ ─ ─ ─ ─ ─ ─ ─ ─ ─ ─ ─ ─ ─ ─ ─ ─ ─ ─ ─ ─ ─ ┤
        │                                                 │
        │              801: Reference signal              │
        │ ◄───────────────────────────────────────────── │
        │                                                 │
```

┌──────────────────────────────────────────────┐
│ 802: Determine channel information of a plurality of │
│ reference signal ports based on the reference signal │
└──────────────────────────────────────────────┘

┌──────────────────────────────────────────────┐
│ 803: Determine channel information of N first port  │
│   groups based on the channel information of the    │
│       plurality of reference signal ports           │
└──────────────────────────────────────────────┘

┌──────────────────────────────────────────────┐
│ 804: Determine channel state information of N        │
│ equivalent ports under the first weight based on the first │
│ weight and the channel information of the N first port │
│                     groups                          │
└──────────────────────────────────────────────┘

┌ ─ ─ ─ ─ ─ ─ ─ ─ ─ ─ ─ ─ ─ ─ ─ ─ ─ ─ ─ ─ ─ ─ ┐
│ 804a: Determine channel state information of the N  │
│ equivalent ports under all of R second weights based on │
│  the R second weights and the channel information of │
│              the N first port groups                │
└ ─ ─ ─ ─ ─ ─ ─ ─ ─ ─ ─ ─ ─ ─ ─ ─ ─ ─ ─ ─ ─ ─ ┘

```
        │          805: First channel state information   │
        │ ──────────────────────────────────────────────►│
        │                                                 │
        │           805a: Indication information           │
        │  (indicating a first codebook or a beam direction│
        │      corresponding to the first weight)          │
        │ ─ ─ ─ ─ ─ ─ ─ ─ ─ ─ ─ ─ ─ ─ ─ ─ ─ ─ ─ ─ ─ ─ ─►│
        │                                                 │
```

FIG. 8

FIG. 9

FIG. 10

FIG. 11a

FIG. 11b

FIG. 11c

Communication apparatus 1200

1201
1202

Processing module — Transceiver module

FIG. 12

Communication apparatus 1300

1301
1302

Transceiver module — Processing module

FIG. 13

Communication apparatus 1400

1410
1430

Processor — Transceiver

Memory

1420

FIG. 14

1500

Communication
apparatus          1510

Processor

1520

Memory

Computer
program code

1530

Transceiver

Transmitter

1531

1532

Receiver

1533

FIG. 15

1633                    1600

Communication
apparatus          1630          1610

Transceiver          Processor

Transmitter

1631

1620

Memory

1632          Receiver          Computer
program code

FIG. 16

## INTERNATIONAL SEARCH REPORT

| International application No. |
| --- |
| **PCT/CN2023/132185** |

| A. | CLASSIFICATION OF SUBJECT MATTER |
| --- | --- |

H04B7/06(2006.01)i

According to International Patent Classification (IPC) or to both national classification and IPC

| B. | FIELDS SEARCHED |
| --- | --- |

Minimum documentation searched (classification system followed by classification symbols)

IPC:H04B,H04W,H04L

Documentation searched other than minimum documentation to the extent that such documents are included in the fields searched

Electronic data base consulted during the international search (name of data base and, where practicable, search terms used)

3GPP, CNTXT, ENTXTC, ENTXT, DWPI: 波束, 参考信号, 等效, 端口, 集, 加权, 权值, 权重, 信道质量, 信道状态, 正交码, 组, 基底, ABF, beam, CDM, channel, code, CQI, CSI, equivalent, group, HBF, port, PMI, RI, reference, RS, set, state, weight, port?

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 103746779 A (SHANGHAI HUAWEI TECHNOLOGIES CO., LTD.) 23 April 2014 (2014-04-23) <br> description, paragraphs [0015]-[0129] and [0146]-[0278], and figures 1-14 | 1-20 |
| A | CN 113872649 A (HUAWEI TECHNOLOGIES CO., LTD.) 31 December 2021 (2021-12-31) <br> entire document | 1-20 |
| A | CN 113992309 A (HUAWEI TECHNOLOGIES CO., LTD.) 28 January 2022 (2022-01-28) <br> entire document | 1-20 |
| A | CN 115118555 A (HUAWEI TECHNOLOGIES CO., LTD.) 27 September 2022 (2022-09-27) <br> entire document | 1-20 |
| A | WO 2021028331 A1 (FRAUNHOFER-GESELLSCHAFT ZURFORDERUNG DER ANGEWANDTEN FORSCHUNG E.V.) 18 February 2021 (2021-02-18) <br> entire document | 1-20 |
| A | NTT DOCOMO. "Hybrid Beamforming for NR" <br> *R1-1612729, 3GPP TSG RAN WG1 Meeting #87,* 18 November 2016 (2016-11-18), <br> entire document | 1-20 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 February 2024** | **18 February 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/132185**

| Patent document cited in search report | | | Publication date (day/month/year) | Patent family member(s) | | | Publication date (day/month/year) |
|---|---|---|---|---|---|---|---|
| CN | 103746779 | A | 23 April 2014 | WO | 2015101109 | A1 | 09 July 2015 |
| CN | 113872649 | A | 31 December 2021 | WO | 2022001933 | A1 | 06 January 2022 |
| CN | 113992309 | A | 28 January 2022 | WO | 2022022331 | A1 | 03 February 2022 |
| | | | | EP | 4181446 | A1 | 17 May 2023 |
| CN | 115118555 | A | 27 September 2022 | WO | 2022193908 | A1 | 22 September 2022 |
| WO | 2021028331 | A1 | 18 February 2021 | EP | 3780410 | A1 | 17 February 2021 |
| | | | | EP | 4014340 | A1 | 22 June 2022 |

Form PCT/ISA/210 (patent family annex) (July 2022)

**EP 4 589 858 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211493654